# EUROPEAN PATENT APPLICATION

(11) **EP 4 715 549 A1**
(43) Date of publication of application: **25.03.2026**
(21) Application number: 24832387.5
(22) Date of filing: 24.06.2024
(51) Int. Cl.: G06F 3/0484, G06F 3/14, G06F 9/451, H04M 1/72454, H04M 1/02, G06F 1/16, G06F 3/048

(54) **ELECTRONIC DEVICE AND METHOD FOR DISPLAYING CONTENT**

(30) Priority: 26.06.2023 KR 20230081880; 03.08.2023 KR 20230101843
(71) Applicant: Samsung Electronics Co., Ltd., Suwon-si, Gyeonggi-do 16677 (KR)
(72) Inventor: JEONG, Jongil, Suwon-si, Gyeonggi-do 16677 (KR); JUN, Jaeyoung, Suwon-si, Gyeonggi-do 16677 (KR)
(74) Representative: Nederlandsch Octrooibureau
(86) International application number: PCT/KR2024/008711
(87) International publication number: WO 2025/005608

(57) **Abstract**

An electronic device and a method for displaying content are provided. The method by which the electronic device displays an execution screen of an application may comprise: an operation (210) of displaying an execution screen of an application on a second display (30) of the electronic device (10000); an operation (200) of, as the electronic device including a first housing (12), a second housing (14), and a third housing (16) is multi-folded, identifying whether one side of the first housing is positioned on a portion corresponding to the third housing in the entire area of a first display (20) of the electronic device, on the basis of a first folding angle between the first housing and the second housing and a second folding angle between the second housing and the third housing; and an operation (220, 230) of changing a display mode of the first display from a first display mode to a second display mode on the basis of identifying whether the one side of the first housing is positioned on the portion corresponding to the third housing, wherein the second display mode may be a mode for controlling an activated partial area of the first display and a deactivated remaining area of the first display on the basis of a position on the portion of the first display at which the one side of the first housing is positioned.

## Description

### [Technical Field]

The disclosure relates to an electronic device and a method for displaying a content, and particularly, to an electronic device and a method for displaying a content according to the electronic device being multi-folded.

### [Background Art]

Thanks to the development of multimedia and network technologies, various services may be provided by using electronic devices. Users may enjoy various contents via foldable electronic devices, and may view contents displayed in various environments via electronic devices folded within predetermined angle ranges. In addition, when a foldable electronic device provides multi-folding, it may be necessary to provide a content to a user appropriately with the electronic device being folded variously.

### [Disclosure of Invention]

### [Solution to Prblem]

An embodiment of the disclosure may provide an electronic device including: a first housing (12); a second housing (14) connected to the first housing via a first hinge (42); a third housing (16) connected to the second housing via a second hinge (44); a first display (20) disposed across the first housing, the second housing, and the third housing and exposed, facing a first direction of the electronic device; a second display (30) disposed at the first housing and facing a second direction of the electronic device; a memory (1630) storing instructions; and at least one processor (1620) operatively connected to the first display, the second display and the memory, wherein, when executed by the at least one processor, the instructions cause the electronic device to: display an execution screen of an application on the second display; identify whether one side of the first housing is located on a portion corresponding to the third housing in an entire area of the first display, based on a first folding angle between the first housing and the second housing and a second folding angle between the second housing and the third housing, according to the electronic device being multi-folded; and change a display mode of the first display from a first display mode to a second display mode, based on identifying that the one side of the first housing is located on the portion corresponding to the third housing, wherein the second display mode is a mode for controlling an activated portion area of the first display and an inactivated remaining area of the first display based on a position on the portion of the first display where the one side of the first housing is located.

In addition, an embodiment of the disclosure may provide a method for displaying an execution screen of an application by an electronic device, the method including: displaying (210) an execution screen of an application on a second display (30) of the electronic device (10000); identifying (200) whether one side of a first housing is located on a portion corresponding to a third housing in an entire area of a first display (20), based on a first folding angle between the first housing and a second housing and a second folding angle between the second housing and the third housing, according to the electronic device including the first housing (12), the second housing (14), and the third housing (16) being multi-folded; and changing (220, 230) a display mode of the first display from a first display mode to a second display mode, based on identifying that the one side of the first housing is located on the portion corresponding to the third housing, wherein the first display is disposed across the first housing, the second housing, and the third housing, and faces a first direction of the electronic device, and the second display is disposed at the first housing and faces a second direction of the electronic device, wherein the second display mode is a mode for controlling an activated portion area of the first display and an inactivated remaining area of the first display based on a position on the portion of the first display where the one side of the first housing is located.

In addition, an embodiment of the disclosure may provide a computer-readable recording medium having a program recorded thereon to execute a method for displaying an execution screen of an application by an electronic device, the method including: displaying (210) an execution screen of an application on a second display (30) of the electronic device (10000); identifying (200) whether one side of a first housing is located on a portion corresponding to a third housing in an entire area of a first display (20), based on a first folding angle between the first housing and a second housing and a second folding angle between the second housing and the third housing, according to the electronic device including the first housing (12), the second housing (14), and the third housing (16) being multi-folded; and changing (220, 230) a display mode of the first display from a first display mode to a second display mode, based on identifying that the one side of the first housing is located on the portion corresponding to the third housing, wherein the first display is disposed across the first housing, the second housing, and the third housing, and faces a first direction of the electronic device, and the second display is disposed at the first housing and faces a second direction of the electronic device, wherein the second display mode is a mode for controlling an activated portion area of the first display and an inactivated remaining area of the first display based on a position on the portion of the first display where the one side of the first housing is located.

### [Brief Description of Drawings]

FIG. 1 is a view illustrating an example of displaying contents on displays of an electronic device which has a folding state changed according to multi-folding according to an embodiment of the disclosure.
FIG. 2 is a flowchart of a method for the electronic device to display a content on at least one display that is exposed by multi-folding according to an embodiment of the disclosure.
FIG. 3 is a flowchart of a method for identifying whether the electronic device is placed on a floor by multi-folding according to an embodiment of the disclosure.
FIG. 4 is a view illustrating an example of a first display of the electronic device which is surrounded by housings by multi-folding according to an embodiment of the disclosure.
FIG. 5 is a flowchart of a method for the electronic device to determine whether a portion area of the first display is exposed according to an embodiment of the disclosure.
FIG. 6 is a view illustrating an example of the first display which is surrounded by housings of the electronic device according to a folding angle of the electronic device according to an embodiment of the disclosure.
FIG. 7 is a view illustrating a graphic user interface (GUI) which is displayed on a portion area of the first display as the portion area of the first display of the electronic device is exposed while displaying an execution screen of an application for a video conference on a second display of the electronic device according to an embodiment of the disclosure.
FIG. 8 is a view illustrating a GUI which is displayed on the portion area of the first display as the portion area of the first display of the electronic device is exposed while displaying a video content on the second display of the electronic device according to an embodiment of the disclosure.
FIG. 9 is a flowchart of a method for changing and displaying a GUI on the portion area of the first display as the size of the exposed portion area of the first display is changed by multi-folding of the electronic device according to an embodiment of the disclosure.
FIG. 10 is a view illustrating an example of change of a GUI on the portion area of the first display as the size of the exposed portion area of the first display is changed by multi-folding of the electronic device according to an embodiment of the disclosure.
FIG. 11 is a view illustrating an example of change of a GUI related to a sleep inducing image on the portion area of the first display as the size of the exposed portion area of the first display is changed by multi-folding of the electronic device according to an embodiment of the disclosure.
FIG. 12 is a view illustrating an example of change of a GUI for a user input related to a video on the portion area of the first display as the size of the exposed portion area of the first display is changed by multi-folding of the electronic device according to an embodiment of the disclosure.
FIG. 13 is a view illustrating an example of change of a GUI for a user input related to a game content on the portion area of the first display as the size of the exposed portion area of the first display is changed by multi-folding of the electronic device according to an embodiment of the disclosure.
FIG. 14 is a view illustrating an example of change of a GUI for unlocking a locking screen on the portion area of the first display as the size of the exposed portion area of the first display is changed by multi-folding of the electronic device according to an embodiment of the disclosure.
FIG. 15 is a view illustrating an example of change of a GUI for displaying information related to a photo on the portion area of the first display as the size of the exposed portion area of the first display is changed by multi-folding of the electronic device according to an embodiment of the disclosure.
FIG. 16 is a flowchart of a method for changing and displaying a GUI on the exposed portion area of the first display when an external input device of the electronic device is gripped by a user according to an embodiment of the disclosure.
FIG. 17 is a flowchart of a method for changing and displaying a GUI on the exposed portion area of the first display when the electronic device outputs notification information according to an embodiment of the disclosure.
FIG. 18 is a flowchart of a method for changing and displaying a GUI on the exposed portion area of the first display considering whether an external input device of the electronic device is gripped by a user or the electronic device outputs notification information according to an embodiment of the disclosure.
FIG. 19 is a view illustrating an example of displaying a GUI related to notification information on the exposed portion area of the first display when the electronic device receives notification information according to an embodiment of the disclosure.
FIG. 20 is a view illustrating an example of displaying a GUI related to a gripped external input device on the exposed portion area of the first display when the external input device of the electronic device is gripped by a user according to an embodiment of the disclosure.
FIG. 21 is a block diagram of an electronic device in a network environment according to various embodiments.

### [Mode for the Invention]

Hereinafter, various embodiments of the disclosure will be described in detail with reference to the accompanying drawings so that a person skilled in the art can easily embody. However, the disclosure may be implemented in different forms and is not limited to the embodiments set forth herein. In addition, in the drawings, parts having nothing to do with the descriptions are omitted for the clear description of the disclosure, and throughout the specification, the same or like reference numerals are used for the same or like elements.

The terms used in the disclosure are described as general terms currently used considering the functions mentioned in the disclosure, but may refer to various other terms according to the intent of those skilled in the art, precedent, the emergence of new technologies. Accordingly, the terms used in the disclosure should not be interpreted solely based on their names and should be interpreted based on the meanings of the terms and the whole context of the disclosure.

In addition, such terms as "1st" and "2nd," or "first" and "second" may be used to explain various components, but the components should not be limited by such terms. These terms may be used for the purpose of distinguishing one component from other components.

Throughout the specification, it is to be understood that if an element is referred to as "connected with/to" another element, it means that the element may be "directly connected" with another element or may be "electrically connected" with another element via an intervening element therebetween. It will be further understood that when a certain portion is referred to as "including" a certain element, it means that the certain portion does not exclude other components and may further include other components unless the context clearly indicates otherwise.

The phrase "in an embodiment" used in the disclosure does not necessarily indicate the same embodiment.

An embodiment of the disclosure may be represented by functional block configurations and various processing steps. Some or all of the functional blocks may be implemented by various numbers of hardware and/or software configurations that perform specific functions. For example, the functional blocks of the disclosure may be implemented by one or more microprocessors or may be implemented by circuit configurations for predetermined functions. In addition, for example, the functional blocks of the disclosure may be implemented in various programming or scripting languages. The functional blocks may be implemented by an algorithm that is executed in one or more processors. The disclosure may employ related-art technologies for electronic environment configuration, signal processing, and/or data processing. Such terms "mechanism", "element", "means", and "configuration" may be broadly used and are not limited to mechanical and physical configurations.

In addition, connecting lines or connecting members among components shown in the drawings are only examples of functional connection and/or physical or circuitry connections. In an actual device, connections among components may be represented by a variety of alternative or additional functional connections, physical connections, or circuit connections.

Hereinafter, the disclosure will be described in detail with reference to the accompanying drawings.

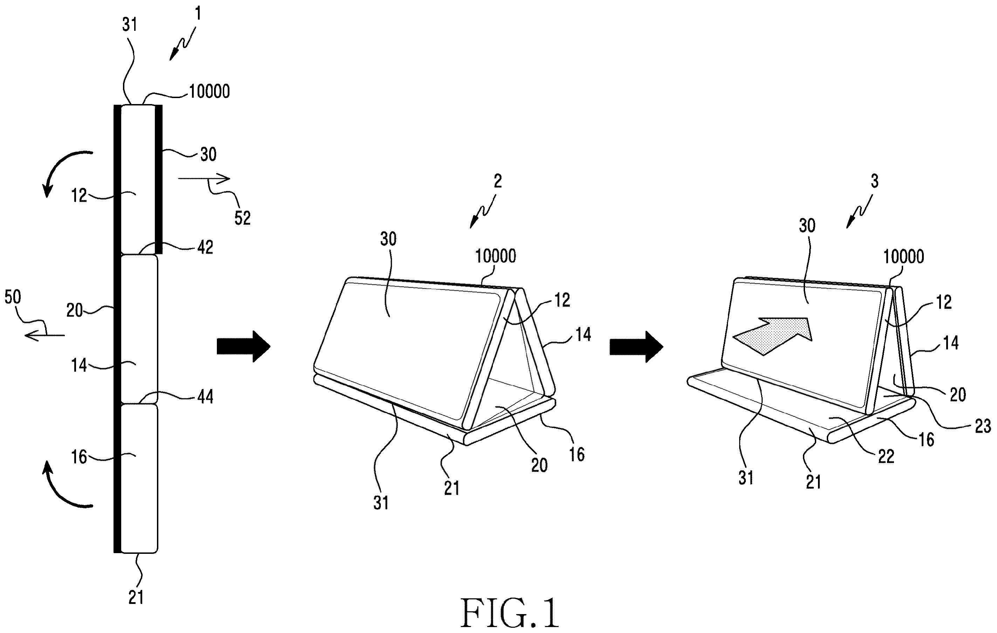

FIG. 1 is a view illustrating an example of displaying contents on displays of an electronic device which has a folding state changed according to multi-folding according to an embodiment of the disclosure.

Referring to identification number 1 of FIG. 1, the electronic device 10000 may include a plurality of housings 12, 14, 16, a plurality of hinges 42, 44, a first display 20 and a second display 30. The plurality of housings 12, 14, 16 may include a first housing 12, a second housing 14, and a third housing 16. The plurality of hinges 42, 44 may include a first hinge 42 and a second hinge 44.

According to an embodiment, the first display 20 may be disposed, facing a first direction 50 of the electronic device 10000. For example, the first display 20 may be a main display of the electronic device 10000, and the first display 20 may be disposed across a front surface of the first housing 12, a front surface of the second housing 14, and a front surface of the third housing 16, thereby being exposed to the outside of the electronic device 10000. The first display 20 may be a flexible display with a foldable portion corresponding to the first hinge 42 and a foldable portion corresponding to the second hinge 44. For example, the first direction 50 may be a direction that faces the front of the electronic device 10000 in a fully unfolded state of the electronic device 10000.

According to an embodiment, the second display 30 may be disposed, facing a second direction 52 which is the opposite direction of the first direction. The second display 30 may be disposed on at least a portion of the rear surface of the first housing 12, thereby being exposed to the outside of the electronic device 10000. For example, the second display 30 may be a sub-display of the electronic device 10000, and the second direction 52 may be a direction that faces the rear of the electronic device 10000 in a fully unfolded state of the electronic device 10000.

Referring to identification number 2 of FIG. 1, the electronic device 10000 may be multi-folded by the first hinge 42 and the second hinge 44. For example, the first display 20 of the electronic device 10000 may be folded by the first hinge 42 in a direction in which the first housing 12 and the second housing 14 face each other, and the first display 20 of the electronic device 10000 may be folded by the second hinge 44 in a direction in which the second housing 14 and the third housing 16 face each other. For example, the electronic device 10000 may be multi-folded such that one side 31 of the first housing 12 contacts one side 21 of the third housing 16, and accordingly, the entire area of the first display 20 of the electronic device 10000 may be surrounded by the first housing 12, the second housing 14, and the third housing 16 of the electronic device 10000 as shown in identification number 2 of FIG. 1. According to an embodiment, the side that is surrounded by the first housing 12, the second housing 14, and the third housing 16 may be an inner side of the electronic device 10000, and the side that is not surrounded by the first housing 12, the second housing 14, and the third housing 16 may be an outer side of the electronic device 10000.

According to an embodiment, the entire area of the first display 20 of the electronic device 10000 may be surrounded by the first housing 12, the second housing 14, and the third housing 16 of the electronic device 10000, such that the entire area of the first display 20 is not exposed to the outside of the electronic device 10000. In this case, only the second display 30 of the electronic device 10000 may be exposed to the outside of the electronic device 10000, and a predetermined content may only be displayed on the second display 30 of the electronic device 10000.

Referring to identification number 3 of FIG. 1, a folding angle between the first housing 12 and the second housing 14 may decrease, and a folding angle between the second housing 14 and the third housing 16 may increase, such that a portion area 22 in the entire area of the first display 20 may be exposed to the outside of the electronic device 10000. The portion area 22 of the first display 20 that is exposed to the outside of the electronic device 10000 may be an area that is not surrounded by the first housing 12, the second housing 14, and the third housing in the entire area of the first display 20. In addition, the remaining area 23 of the first display 20 may be an area that is surrounded by the first housing 12, the second housing 14, and the third housing in the entire area of the first display 20.

According to an embodiment, as the portion area 22 in the entire area of the first display 20 is exposed to the outside of the electronic device 10000, the display mode of the first display 20 may change from a first display mode to a second display mode. For example, the first display mode may be a display mode in which the entire area of the first display 20 is activated. For example, the second display mode may be a mode in which the portion area 22 of the first display 20 is activated (for example, ON) and the remaining area 23 is inactivated (for example, OFF).

According to an embodiment, as the portion area 22 in the entire area of the first display 20 is exposed to the outside of the electronic device 10000, a user interface related to a predetermined content may be displayed on the exposed portion area 22.

In the above example, it is illustrated that the display mode of the first display 20 changes from the first display mode to the second display as the portion area 22 is exposed. However, the time that the display mode of the first display 20 changes is not limited thereto. For example, as the electronic device 10000 is multi-folded such that the one side 31 of the first housing 12 contacts the one side 21 of the third housing 16 and the entire area of the first display 20 of the electronic device 10000 is surrounded by the first housing 12, the second housing 14, and the third housing 16, the display mode of the first display 20 may change from the first display mode to the second display mode.

The electronic device 10000 may be a foldable device that is folded by a hinge, and for example, may be, but not limited to, a smartphone, a tablet PC, a mobile phone, a personal digital assistant (PDA), a laptop, a media player, a global positioning system (GPS) device, an e-book terminal, a terminal for digital broadcasting, a navigation system, a digital camera, a home appliance, or other mobile computing devices.

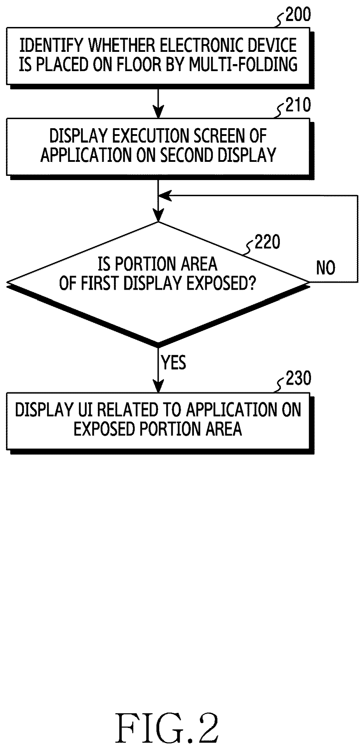

FIG. 2 is a flowchart of a method for an electronic device to display a content on at least one display exposed by multi-folding according to an embodiment of the disclosure.

In operation 200, the electronic device 10000 may identify whether the electronic device 10000 is placed on a floor by multi-folding. According to an embodiment, the electronic device 10000 being placed on the floor may include being placed on a surface of an object. For example, when the electronic device 10000 is placed on an object like a table, a shelf, and a chair, it may be identified that the electronic device 10000 is placed on a floor. Multi-folding may include a plurality of portions of the electronic device 10000 being folded by a plurality of hinges. For example, when the electronic device 10000 includes the first hinge 42 and the second hinge 44, the first display 20 of the electronic device 10000 may be folded by the first hinge 42 in a direction in which the first housing 12 and the second housing 14 face each other, and the first display 20 of the electronic device 1000 may be folded by the second hinged 44 in a direction in which the second housing 14 and the third housing 16 face each other.

According to an embodiment, the electronic device 10000 may identify whether the first display 20 of the electronic device 10000 is surrounded by the housings of the electronic device 10000 by multi-folding, based on a first folding angle between the first housing 12 and the second housing 14 and a second folding angle between the second housing 14 and the third housing 16. For example, the electronic device 10000 may be multi-folded such that one side of the first housing 12 contacts one side of the third housing 16, and accordingly, the entire area of the first display 20 of the electronic device 10000 may be surrounded by the first housing 12, the second housing 14, and the third housing 16 of the electronic device 10000. The entire area of the first display 20 of the electronic device 10000 may be surrounded by the first housing 12, the second housing 14, and the third housing 16 of the electronic device 10000, such that the entire area of the first display 20 is not exposed to the outside of the electronic device 10000.

According to an embodiment, the electronic device 10000 may identify whether the electronic device 10000 is placed on a floor with the first display 20 of the electronic device 10000 being surrounded by the housings of the electronic device 10000 by multi-folding. The electronic device 10000 may identify whether the first display 20 of the electronic device 10000 is surrounded by the housings of the electronic device by multi-folding, based on the first folding angle between the first housing 12 and the second housing 14 and the second folding angle between the second housing 14 and the third housing 16. The electronic device 10000 may identify whether the electronic device 10000 is placed on the floor by using at least one sensor (for example, a gyro sensor, an acceleration sensor) and/or at least one camera within the electronic device 10000.

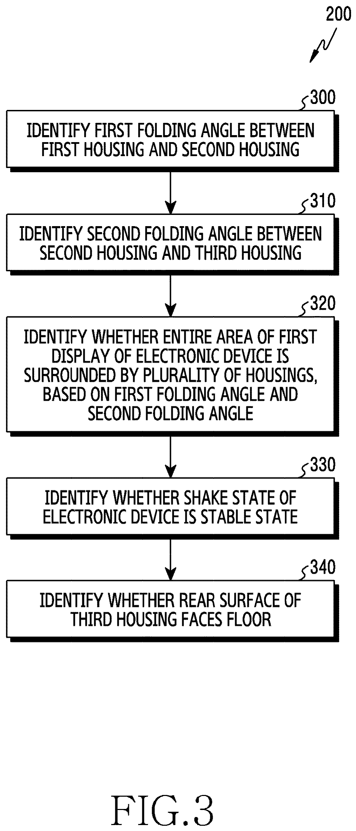

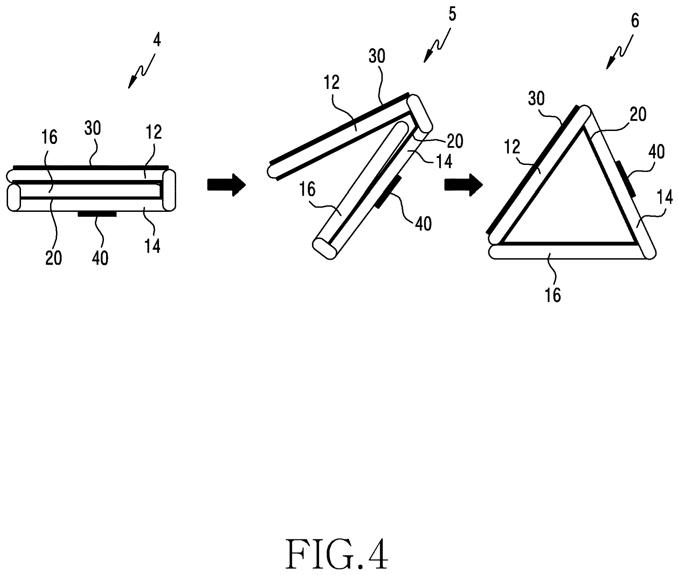

An example of determining whether the electronic device 10000 is placed on the floor by multi-folding will be described in detail with reference to FIGS. 3 and 4, which will be described below.

In the above example, it is determined whether the electronic device 10000 is placed on the floor by multi-folding, but this should not be considered as limiting. In operation 200 of FIG. 2, the electronic device 10000 may not determine whether the electronic device 10000 is placed on the floor by multi-folding, but may identify whether the first display 20 of the electronic device 10000 is surrounded by the housings of the electronic device 10000 by multi-folding. For example, the electronic device 10000 may identify whether one side of the first housing 12 is located on a first position of the first display 20 corresponding to the third housing 16, based on the first folding angle between the first housing 12 and the second housing 14 and the second folding angle between the second housing 14 and the third housing 16, according to the electronic device 10000 being multi-folded. For example, when the one side of the first housing 12 is located on one side of the third housing 16 or is located at a position on the first display 20 within a first distance range from the one side of the third housing 16, the electronic device 10000 may determine that the one side of the first housing 12 is located on the first position of the first display 20 corresponding to the third housing 16 and the first display 20 of the electronic device 10000 is surrounded by the housings of the electronic device 10000 by multi-folding. For example, the first position may be a position within the first distance range from the one side of the third housing 16 on the first display 20 corresponding to the third housing 16.

According to an embodiment, the electronic device 10000 may be multi-folded to have the one side 31 of the first housing 12 contact the one side 21 of the third housing 16, such that the entire area of the first display 20 of the electronic device 10000 is surrounded by the first housing 12, the second housing 14, and the third housing 16 of the electronic device 10000, and accordingly, the display mode of the first display 20 may change from the first display mode to the second display mode. For example, the first display mode may be a display mode in which the entire area of the first display 20 is activated. For example, the second display mode may be a mode in which the portion area 22 of the first display 20 is activated and the remaining area 23 is inactivated.

In operation 210, the electronic device 10000 may display an execution screen of an application on the second display 30. When the first display 20 of the electronic device 10000 is surrounded by the plurality of housings 12, 14, 16 of the electronic device by multi-folding, the electronic device 10000 may display the execution screen of the application on the second display 30 of the electronic device 10000. Alternatively, when the electronic device 10000 is placed on a floor with the first display 20 of the electronic device 10000 being surrounded by the plurality of housings of the electronic device by multi-folding, the electronic device 10000 may display the execution screen of the application on the second display 30.

According to an embodiment, the application may be an application that supports a function of displaying the execution screen of the application on the second display 30 of the electronic device 10000 when the electronic device 10000 is multi-folded. When the first display 20 is surrounded by the housings by multi-folding while displaying the execution screen of the application on the first display 20 of the electronic device 10000, the application may provide the execution screen to be displayed on the second display 30 of the electronic device 10000.

In operation S220, the electronic device 10000 may determine whether a portion area of the first display 20 is exposed. When the entire area of the first display 20 of the electronic device 10000 is surrounded by the housings of the electronic device 10000 by multi-folding, folding angles of multi-folding of the electronic device 10000 may be changed, such that the portion area of the first display 20 of the electronic device 10000 is exposed to the outside of the electronic device 10000. For example, as the folding angles of multi-folding of the electronic device 10000 are changed with the first display 20 of the electronic device 10000 being surrounded by the first housing 12, the second housing 14, and the third housing 16, one end of the third housing 16 may slide on the first display 20 within the first housing 12. For example, as the one end of the third housing 16 slides on the first display 20 within the first housing 12, a portion area of the first display 20 within the first housing 12 may be exposed to the outside of the electronic device 10000.

According to an embodiment, in the state in which the entire area of the first display 20 of the electronic device 10000 is surrounded by the housings of the electronic device 10000 by multi-folding and the electronic device 10000 is placed on the floor, the electronic device 10000 may determine whether the portion area of the first display 20 is exposed.

According to an embodiment, as the folding angles of multi-folding are changed, the size of the exposed portion area of the first display 20 may increase or decrease. For example, as the size of the exposed portion area of the first display 20 increases, one side of the first housing 12 may be located on a second position or a third position of the first display 20 corresponding to the third housing 16. For example, the second position of the first display 20 corresponding to the third housing 16 may be a position that is longer than the first distance range and shorter than a second distance range from one side of the third housing 16 on the first display 20 corresponding to the third housing 16. For example, the third position of the first display 20 corresponding to the third housing 16 may be a position that is longer than the second distance range and shorter than a third distance range from one side of the third housing 16 on the first display 20 corresponding to the third housing 16.

According to an embodiment, the electronic device 10000 may determine whether the portion area of the first display 20 is exposed, by using at least one sensor within the electronic device 10000. The electronic device 10000 may determine whether the portion area of the first display 20 is exposed by using at least one of a gyro sensor, an acceleration sensor, or an angle sensor, for example, but this should not be considered as limiting.

In the above example, it is illustrated that as the entire area of the first display 20 of the electronic device 10000 is surrounded by the first housing 12, the second housing 14, and the third housing 16 of the electronic device 10000, the display mode of the first display 20 changes from the first display mode to the second display mode, but this should not be considered as limiting. For example, as the portion area 22 in the entire area of the first display 20 is exposed to the outside of the electronic device 10000, the display mode of the first display 20 may change from the first display mode to the second display mode.

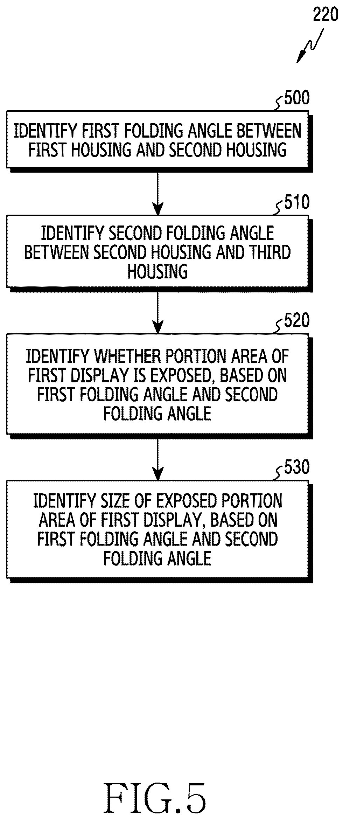

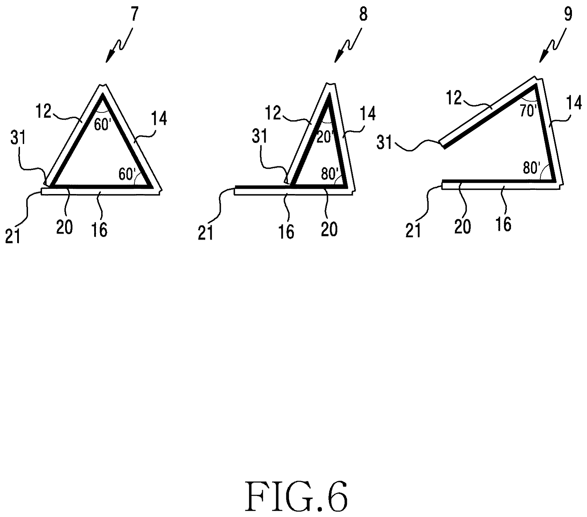

An example of the electronic device 10000 determining whether the portion area of the first display 20 is exposed will be described in detail with reference to FIGS. 5 and 6, which will be described below.

In operation 230, the electronic device 10000 may display a UI related to the application on the exposed portion area. According to an embodiment, when the portion area of the first display 20 is exposed with the entire area of the first display 20 of the electronic device 10000 being surrounded by the housings of the electronic device 10000 by multi-folding, the electronic device 10000 may display a UI related to the application of the execution screen displayed on the second display 30 on the exposed portion area of the first display 20. According to an embodiment, the UI may include a graphical user interface (GUI). According to an embodiment, when the portion area of the first display 20 is exposed in the state in which the entire area of the first display 20 of the electronic device 10000 is surrounded by the housings of the electronic device 10000 by multi-folding and the electronic device 10000 is placed on the floor, the electronic device 10000 may display the UI related to the application of the execution screen displayed on the second display 30 on the exposed portion area of the first display 20. In this case, the electronic device 10000 may activate the exposed portion area of the first display 20 and may inactivate the remaining area of the first display 20 that is not exposed.

According to an embodiment, the UI related to the application may include a UI that is provided by the application and/or a UI that is provided by another application related to the application.

For example, the UI displayed on the exposed portion area of the first display 20 may include a portion of the execution screen of the application displayed on the second display 30. For example, the UI displayed on the exposed portion area of the first display 20 may include a UI that is provided by the application to control the application or to perform a user input on the application. For example, the UI displayed on the exposed portion area of the first display 20 may include at least a portion of the execution screen of a second application that is mainly used by a user in relation with the application.

According to an embodiment, as the folding angles of multi-folding are changed, the size of the exposed portion area of the first display 20 may increase or decrease, and as the size of the exposed portion area of the first display 20 increases or decreases, the UI displayed on the exposed portion area may be changed. In this case, the electronic device 10000 may identify whether one side of the first housing 12 is located on the second position or the third position of the first display 20 corresponding to the third housing 16. The electronic device 10000 may identify whether one side of the first housing 12 is located on the second position or the third position of the first display 20 corresponding to the third housing 16, based on the folding angles of multi-folding.

According to an embodiment, as the folding angles of multi-folding are changed, the electronic device 10000 may control the first display 20 such that the size of the exposed portion area of the first display 20 that is activated increases and the size of the remaining area of the first display 20 that is not exposed and is inactivated decreases. According to an embodiment, as the folding angles of multi-folding are changed, the electronic device 10000 may control the first display 20 such that the size of the exposed portion area of the first display 20 that is activated decreases and the remaining area of the first display 20 that is not exposed and is inactivated increases.

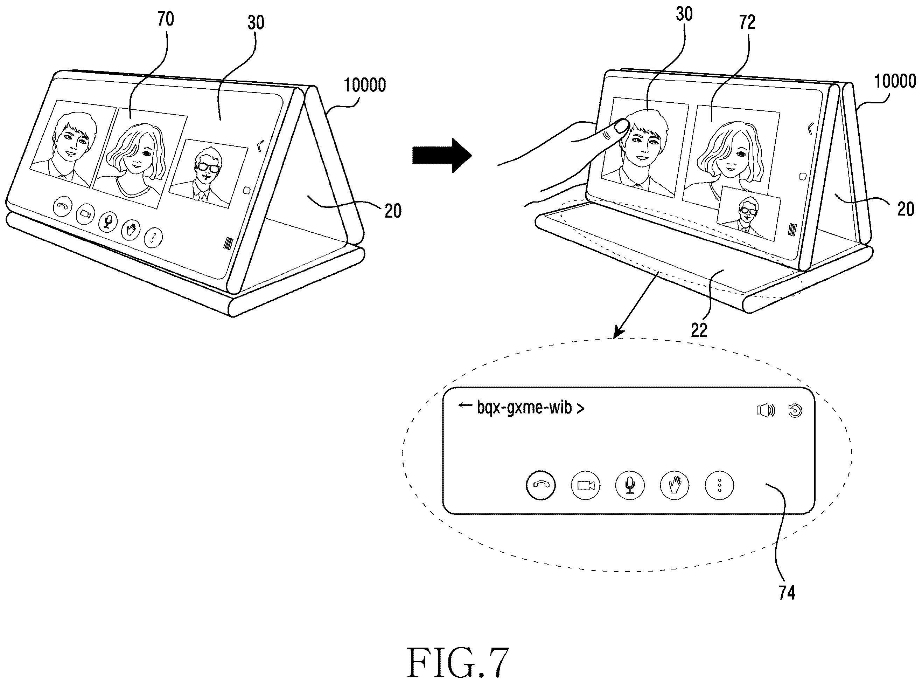

However, the example of the UI displayed on the exposed portion area of the first display 20 is not limited thereto, and examples of the UI displayed on the exposed portion area of the first display 20 will be described in detail with reference to FIGS. 7 to 20, which will be described below. Although it is illustrated that the displayed UI is a GUI, the type of the UI is not limited to the GUI.

FIG. 3 is a flowchart of a method for identifying whether the electronic device is placed on the floor by multi-folding according to an embodiment of the disclosure.

Operations of FIG. 3 may correspond to operation 200 of FIG. 2, but are not limited thereto.

In operation 300, the electronic device 10000 may identify the first folding angle between the first housing 12 and the second housing 14. For example, the electronic device 10000 may measure the first folding angle between the first housing 12 and the second housing 14 by using an angle sensor disposed on the periphery of the first hinge 42.

In operation 310, the electronic device 10000 may identify the second folding angle between the second housing 14 and the third housing 16. For example, the electronic device 10000 may measure the second folding angle between the second housing 14 and the third housing 16 by using an angle sensor disposed on the periphery of the second hinge 44.

In operation 320, the electronic device 10000 may identify whether the entire area of the first display 20 of the electronic device 10000 is surrounded by the plurality of housings, based on the first folding angle and the second folding angle. According to an embodiment, the electronic device 10000 may identify whether one side of the first housing 12 is located at the first position on the first display 20 corresponding to the third housing 16. The electronic device 10000 may identify whether the entire area of the first display 20 of the electronic device 10000 is surrounded by the plurality of housings and the first display 20 is not exposed to the outside of the electronic device 10000, based on the first folding angle and the second folding angle. For example, when the widths of the first housing 12, the second housing 14, and the third housing 16 are the same and the first folding angle is 60 degrees and the second folding angle is 60 degrees, the electronic device 10000 may determine that one side of the first housing 12 and one side of the third housing 16 contact each other and thus the first display 20 is surrounded by the first housing 12, the second housing 14, and the third housing 16. However, the folding angles for determining whether the first display 20 is surrounded by the first housing 12, the second housing 14, and the third housing 16 are not limited thereto. For example, when the widths of the first housing 12, the second housing 14, and the third housing 16 are different, the folding angles for determining whether the first display 20 is surrounded by the first housing 12, the second housing 14, and the third housing 16 may be different from the folding angles when the widths of the first housing 12, the second housing 14, and the third housing 16 are the same.

For example, even if one side of the first housing 12 does not physically contact one side of the third housing 16, when the first folding angle is included within an angle range of about 60 degrees including 60 degrees and the second folding angle is included in an angle range of about 60 degrees including 60 degrees, the electronic device 10000 may determine that the first display 20 is surrounded by the first housing 12, the second housing 14, and the third housing 16 and is not exposed to the outside. In addition, it may be identified that one side of the first housing 12 and one side of the third housing 16 contact through a separate sensor or a separate detection device, such that the electronic device 10000 determines that the first display 20 is surrounded by the first housing 12, the second housing 14, and the third housing 16 and is not exposed to the outside.

Examples of the first display 20 of the electronic device 10000 being surrounded by the plurality of housings of the electronic device 10000 will be described in detail with reference to FIGS. 4 and 6, which will be described below.

In operation 330, the electronic device 10000 may identify whether a shake state of the electronic device 10000 is a stable state. The shake state of the electronic device 10000 may be a state of the electronic device 10000 regarding whether the electronic device 10000 is shaking. A state in which the electronic device 1000 is stationary may be the stable state. For example, when the electronic device is placed on a floor and does not move, it may be determined that the shake state of the electronic device 10000 is the stable state. For example, when the electronic device 10000 is held on a holder and does not move, it may be determined that the shake state of the electronic device 10000 is the stable state.

In operation 340, the electronic device 10000 may identify whether the rear surface of the housing 16 faces the floor. The electronic device 10000 may identify whether the rear surface of the third housing 16 faces the floor by using a sensor within the electronic device 10000. For example, the electronic device 10000 may identify whether the electronic device 10000 is placed on the floor with the rear surface of the third housing 16 facing the floor by using a gyro sensor within the electronic device 10000. For example, the electronic device 10000 may identify whether the electronic device 10000 is placed on the floor with the rear surface of the third housing 16 facing the floor, based on a direction that a camera disposed in the second housing 14 of the electronic device 10000 faces.

According to an embodiment, it may be determined whether to display the execution screen of the application on the second display 30, based on at least one of whether the shake state of the electronic device 10000 is the stable state or whether the rear surface of the third housing 16 faces the floor, and whether the entire area of the first display 20 is surrounded by the plurality of housings.

It is illustrated in FIG 3 that in operation 330, it is identified whether the shake state of the electronic device 10000 is the stable state, and in operation 340, it is identified whether the rear surface of the third housing 16 of the electronic device 10000 faces the floor, but this should not be considered as limiting. Operations 330 and 340 of FIG. 3 may be omitted.

FIG. 4 is a view illustrating examples of the first display of the electronic device being surrounded by the housings by multi-folding according to an embodiment of the disclosure.

Identification number 4 of FIG. 4 illustrates a fully folded state of the electronic device 10000 according to an embodiment, identification number 6 of FIG. 4 illustrates a state in which the first display 20 of the electronic device 10000 is surrounded by the first housing 12, the second housing 14, and the third housing 16 and is not exposed to the outside, and identification 5 of FIG. 4 illustrates an intermediate state in which the electronic device 10000 according to an embodiment changes from the state of identification number 4 of FIG. 4 to the state of identification number 6 of FIG. 4.

According to an embodiment, in the fully folded state of the electronic device 10000, a folding angle between the first housing 12 and the second housing 14, and a folding angle between the second housing 14 and the third housing 16 increase, such that the first display 20 of the electronic device 10000 is surrounded by the first housing 12, the second housing 14, and the third housing 16 and is not exposed to the outside.

FIG. 5 is a flowchart of a method for the electronic device to determine whether a portion area of the first display is exposed according to an embodiment of the disclosure.

Operations of FIG. 5 may correspond to operation 220 of FIG. 2 but is not limited thereto.

In operation 500, the electronic device 10000 may identify the first folding angle between the first housing 12 and the second housing 14. For example, the electronic device 10000 may measure the first folding angle between the first housing 12 and the second housing 14 by using an angle sensor disposed on the periphery of the first hinge 42. For example, the electronic device 10000 may measure the first folding angle between the first housing 12 and the second housing 14 as the folding state of the electronic device 10000 is changed by the user in the state in which the first display 20 is surrounded by the first housing 12, the second housing 14, and the third housing 16.

In operation 510, the electronic device 10000 may identify the second folding angle between the second housing 14 and the third housing 16. For example, the electronic device 10000 may measure the second folding angle between the second housing 14 and the third housing 16 by using an angle sensor disposed on the periphery of the second hinge 44. For example, the electronic device 10000 may measure the second folding angle between the second housing 14 and the third housing 16 as the folding state of the electronic device 10000 is changed by the user in the state in which the first display 20 is surrounded by the first housing 12, the second housing 14, and the third housing 16.

In operation 520, the electronic device 10000 may identify whether a portion area of the first display is exposed based on the first folding angle and the second folding angle. As the folding state of the electronic device 10000 is changed, a portion area in the entire area of the first display 20 surrounded by the first housing 12, the second housing 14, and the third housing 16 of the electronic device 10000 may be exposed to the outside of the electronic device 10000. In this case, the electronic device 10000 may identify whether a portion area of the first display 20 is exposed to the outside of the electronic device 10000, based on the first folding angle and the second folding angle. In addition, the electronic device 10000 may identify whether the first display 20 of the electronic device 10000 is surrounded by the housings of the electronic device 1000 by multi-folding. For example, the electronic device 10000 may identify whether one side of the first housing 12 is located on the first position of the first display 20 corresponding to the third housing 16 according to the electronic device 10000 being multi-folded. For example, when one side of the first housing 12 is located on one side of the third housing 16 or is located at a position on the first display 20 within the first distance range from one side of the third housing, the electronic device 10000 may determine that one side of the first housing 12 is located on the first position of the first display 20 corresponding to the third housing 16 and the first display 20 of the electronic device 10000 is surrounded by the housings of the electronic device 10000 by multi-folding.

In operation 530, the electronic device 10000 may identify the size of the exposed portion area of the first display based on the first folding angle and the second folding angle. The electronic device 10000 may identify the size of the exposed portion area of the first display 20, based on the first folding angle and the second folding angle. According to the first folding angle and the second folding angle, the size of the exposed portion area of the first display 20 may be pre-set according to the sizes of the first housing 12, the second housing 14, and the third housing 16 of the electronic device 10000. For example, according to a combination of the first folding angle and the second folding angle, the size of the exposed portion area of the first display 20 may be pre-set.

According to an embodiment, the electronic device 10000 may identify the size of the exposed portion area of the first display 20 by determining at which position on the first display 20 corresponding to the third housing 16 one side of the first housing 12 is located. For example, the electronic device 10000 may identify whether the one side of the first housing 12 is located on the first position, the second position, or the third position on the first display 20 corresponding to the third housing 16. For example, the electronic device 10000 may identify whether the one side of the first housing 12 is located on the first position, the second position, or the third position of the first display 20 corresponding to the third housing 16, based on the folding angles of multi-folding. For example, as the size of the exposed portion area of the first display 20 increases, the one side of the first housing 12 may be shifted from the first position of the first display 20 corresponding to the third housing 16 to the second position or the third position. For example, the second position of the first display 20 corresponding to the third housing 16 may be a position that is longer than the first distance range and shorter than the second distance range from one side of the third housing 16 on the first display 20 corresponding to the third housing 16. For example, the third position of the first display 20 corresponding to the third housing 16 may be a position that is longer than the second distance range and shorter than the third distance range from one side of the third housing 16 on the first display 20 corresponding to the third housing 16.

FIG. 6 is a view illustrating an example of the first display being surrounded by the housings of the electronic device according to a folding angle of the electronic device according to an embodiment of the disclosure.

Referring to identification number 7 of FIG. 6, the sizes of the first housing 12, the second housing 14, and the third housing 16 may be the same, and the first folding angle between the first housing 12 and the second housing 14 may be 60 degrees and the folding angle between the second housing 14 and the third housing 16 may be 60 degrees. In this case, the entire area of the first display 20 of the electronic device 10000 may be surrounded by the first housing 12, the second housing 14, and the third housing 16. Accordingly, the entire area of the first display 20 of the electronic device 10000 may not be exposed to the outside of the electronic device 10000. For example, one side 31 of the first housing 12 may contact one side of the third housing 16. In addition, it may be determined that the one side 31 of the first housing 12 is located on the first position of the first display 20 corresponding to the third housing 16. In FIG. 6, it is illustrated that, when the one side 31 of the first housing 12 contacts the one side 21 of the third housing 16, it is determined that the one side 31 of the first housing 12 is located on the first position of the first display 20 corresponding to the third housing 16, but this should not be considered as limiting. For example, when the one side 31 of the first housing 12 is located at a position on the first display 20 within the first distance range from the one side 21 of the third housing, it may be determined that the one side of the first housing 12 is located on the first position of the first display 20 corresponding to the third housing 16.

Referring to identification number 8 of FIG. 6, the sizes of the first housing 12, the second housing 14, and the third housing 16 (for example, widths of the housings) may be the same, and the first folding angle between the first housing 12 and the second housing 14 may be 20 degrees and the folding angle between the second housing 14 and the third housing 16 may be 80 degrees. In this case, the portion area 22 in the entire area of the first display 20 of the electronic device 10000 may not be surrounded by the first housing 12, the second housing 14, and the third housing 16. Accordingly, the portion area 22 of the first display 20 of the electronic device 10000 may be exposed to the outside of the electronic device 10000. In addition, for example, as the size of the exposed portion area of the first display 20 increases, the one side of the first housing 12 may be located on the second position or the third position of the first display 20 corresponding to the third housing 16.

Referring to identification number 9 of FIG. 6, the sizes of the first housing 12, the second housing 14, and the third housing 16 may be the same, and the first folding angle between the first housing 12 and the second housing 14 may be 70 degrees and the folding angle between the second housing 14 and the third housing 16 may be 80 degrees. In this case, the entire area of the first display 20 of the electronic device 10000 may not be surrounded by the first housing 12, the second housing 14, and the third housing 16.

FIG. 7 is a view illustrating a GUI displayed on a portion area of the first display as the portion area of the first display of the electronic device is exposed while displaying an execution screen of an application for a video conference on the second display of the electronic device according to an embodiment of the disclosure.

Referring to FIG. 7, when the first display 20 of the electronic device 10000 is surrounded by the housings of the electronic device 10000, an execution scree 70 of an application for a video conference may be displayed on the second display 30 of the electronic device 10000. When the first display 20 of the electronic device 10000 is surrounded by the housings of the electronic device 1000 while displaying the execution screen of the application for the video conference on the first display 20 of the electronic device 10000 in the unfolded state of the electronic device 10000, the execution screen 70 of the application for replaying a video may be displayed on the second display 30 of the electronic device 10000. Thereafter, as the portion area 22 of the first display 20 of the electronic device 10000 is exposed, the execution screen 70 of the application for the video conference may be changed, and a changed execution screen 72 may be displayed on the second display 30 of the electronic device 10000. In addition, a GUI 74 related to the application for the video conference may be displayed on the exposed portion area 22 of the first display. For example, the GUI 74 including objects for controlling the video conference within the execution screen 70 of the application for the video conference may be removed from the changed execution screen 72, and the GUI 74 may be displayed on the exposed portion area 22.

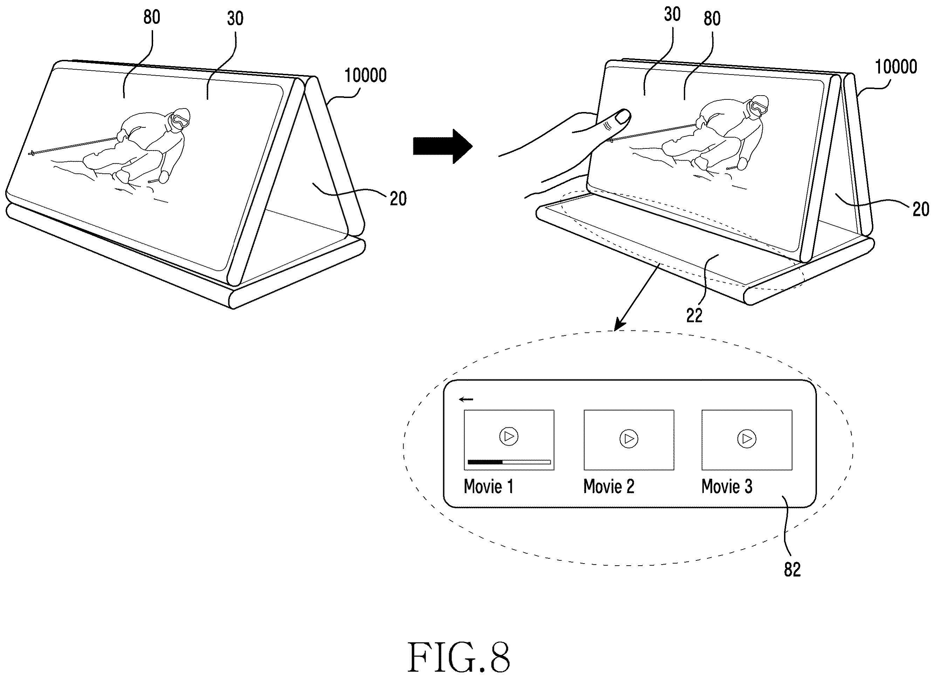

FIG. 8 is a view illustrating a GUI displayed on a portion area of the first display as the portion area of the first display of the electronic device is exposed while displaying a video content on the second display of the electronic device according to an embodiment.

Referring to FIG. 8, when the first display 20 of the electronic device 10000 is surrounded by the housings of the electronic device 10000, an execution screen 80 of an application for replaying a video may be displayed on the second display 30 of the electronic device 10000. When the first display 20 of the electronic device 10000 is surrounded by the housings of the electronic device 1000 while displaying the execution screen 80 of the application for replaying the video on the first display 20 of the electronic device 10000 in the unfolded state of the electronic device 10000, the execution screen 80 of the application for replaying the video may be displayed on the second display 30 of the electronic device 10000. Thereafter, as the portion area 22 of the first display 20 of the electronic device 10000 is exposed, the execution screen 80 of the application for replaying the video may be maintained, and a GUI 82 for controlling the replayed video may be displayed on the exposed portion area 22 of the first display. For example, the GUI 82 for controlling the replayed video may be a GUI for changing a replay position of the video, but is not limited thereto.

FIGS. 7 and 8 illustrate examples of contents displayed on the second display 30 of the electronic device 10000 and the portion area of the first display 20 of the electronic device 10000 when the portion area of the first display 20 is exposed as the folding angle of the electronic device 10000 is changed in the state in which the first display 20 of the electronic device 10000 is surrounded by the housings, but this should not be considered as limiting.

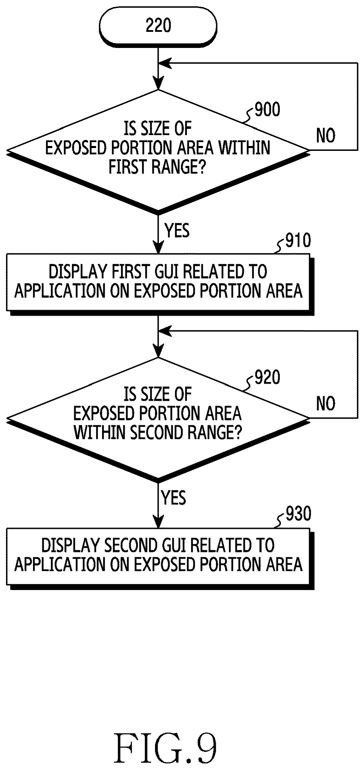

FIG. 9 is a flowchart of a method for changing and displaying a GUI on a portion area of the first display as the size of the exposed portion area of the first display is changed by multi-folding of the electronic device according to an embodiment of the disclosure.

Operations 900 to 930 of FIG. 9 may be performed after operation 220 of FIG. 2, but this should not be considered as limiting.

In operation 900, the electronic device 10000 may determine whether the size of the exposed portion area is within a first range. For example, the electronic device 10000 may determine whether one side 31 of the first housing 12 is located at a position that is longer than the first distance range and shorter than the second distance range from one side 21 of the third housing 16. As the portion area of the first display 20 is exposed due to a change in the folding angle of the electronic device 10000, the electronic device 10000 may identify the size of the exposed portion area of the first display 20. According to an embodiment, the size of the exposed portion area of the first display 20 may be determined based on a combination of the folding angles of the electronic device 10000. For example, the electronic device 10000 may calculate the size of the exposed portion area of the first display 20, based on the first folding angle between the first housing 12 and the second housing 14, the second folding angle between the second housing 14 and the third housing 16, the size of the first housing 12, the size of the second housing 14, and the size of the third housing 16. In addition, the electronic device 10000 may determine whether the size of the exposed portion area is within the first range by comparing the size of the exposed portion area of the first display 20 and a pre-set first range. For example, the first range may be a range that is pre-set to display a first GUI related to an application.

In operation 910, the electronic device 10000 may display the first GUI related to the application on the exposed portion area. The first GUI to be displayed on the exposed portion area having a size within the first range may be a GUI that is pre-set by the application, and in this case, the application may be an application that supports a function of displaying an additional GUI on the exposed portion area.

According to an embodiment, the electronic device 10000 may display, on the exposed portion area having the size within the first range, the first GUI that is provided by the application to control operations of the application. For example, the electronic device 10000 may display, on the exposed portion area having the size within the first range, the first GUI including objects for selecting functions of the application, and/or objects for a user input on the application.

According to an embodiment, the electronic device 10000 may display, on the exposed portion area having the size within the first range, the first GUI that is provided by a second application related to operations of the application. For example, the first GUI including objects provided by another application for a user input on the application may be displayed. For example, another application may be an application providing a key input, and the first GUI may be a GUI of a number keypad for a number input.

According to an embodiment, the electronic device 10000 may display, on the exposed portion area having the size within the first range, the first GUI including objects for executing another application related to the application. For example, the electronic device 10000 may display the first GUI including icons for executing pre-set other applications that have the possibility of being executed along with the application.

Examples of the first GUI displayed on the exposed portion area having the size within the first range are not limited thereto, and the first GUI including various objects may be displayed on the exposed portion area having the size within the first range.

In operation 920, the electronic device 10000 may determine whether the size of the exposed portion area is within a second range. For example, the electronic device 10000 may determine whether the one side 31 of the first housing 12 is located at a position that is longer than the second distance range and shorter than the third distance range from the one side 21 of the third housing 16. As the size of the exposed portion area of the first display 20 increases due to a change in the folding angle of the electronic device 10000, the electronic device 10000 may identify the size of the exposed portion area of the first display 20. According to an embodiment, the size of the exposed portion area of the first display 20 may be determined based on a combination of the folding angles of the electronic device 10000. For example, the electronic device 10000 may calculate the size of the exposed portion area of the first display 20, based on the first folding angle between the first housing 12 and the second housing 14, the second folding angle between the second housing 14 and the third housing 16, the size of the first housing 12, the size of the second housing 14, and the size of the third housing 16. In addition, the electronic device 10000 may determine whether the size of the exposed portion area is within the second range by comparing the size of the exposed portion area of the first display 20 and a pre-set second range. For example, the second range may be a range that is pre-set to display a second GUI related to the application. In addition, the second range of the exposed portion area may be larger than the first range of the exposed portion area.

In operation 930, the electronic device 10000 may display the second GUI related to the application on the exposed portion area. Based on identifying that the size of the exposed portion area having the size within the first range increases to a size of the first range, the electronic device 10000 may display the second GUI on the portion area of the first display 20. The second GUI to be displayed on the exposed portion area may be a GUI that is pre-set by the application, and in this case, the application may be an application that supports a function of displaying an additional GUI on the exposed portion area.

According to an embodiment, the electronic device 10000 may display, on the exposed portion area having the size within the second range, the second GUI that is provided by the application to control operations of the application. For example, the second GUI including objects for selecting functions of the application and/or objects for a user input on the application may be a GUI that has more objects than the first GUI.

According to an embodiment, the electronic device 10000 may display, on the exposed portion area having the size within the second range, the second GUI that is provided by another application related to operations of the application. For example, the second GUI including objects that are provided by another application for a user input on the application may be displayed. In this case, another application may be an application that provides a key input, and the second GUI may be a GUI of a keyboard through which characters are inputted.

According to an embodiment, the electronic device 10000 may display, on the exposed portion area having the size within the second range, the second GUI including objects for executing another application associated with the application and/or an execution screen of another application. For example, the electronic device 10000 may display the second GUI including icons for executing pre-set other applications that have the possibility of being executed along with the application, and/or execution screens of other applications.

Examples of the second GUI displayed on the exposed portion area having the size within the second range are not limited thereto, and the second GUI including various objects may be displayed on the exposed portion area having the size within the second range.

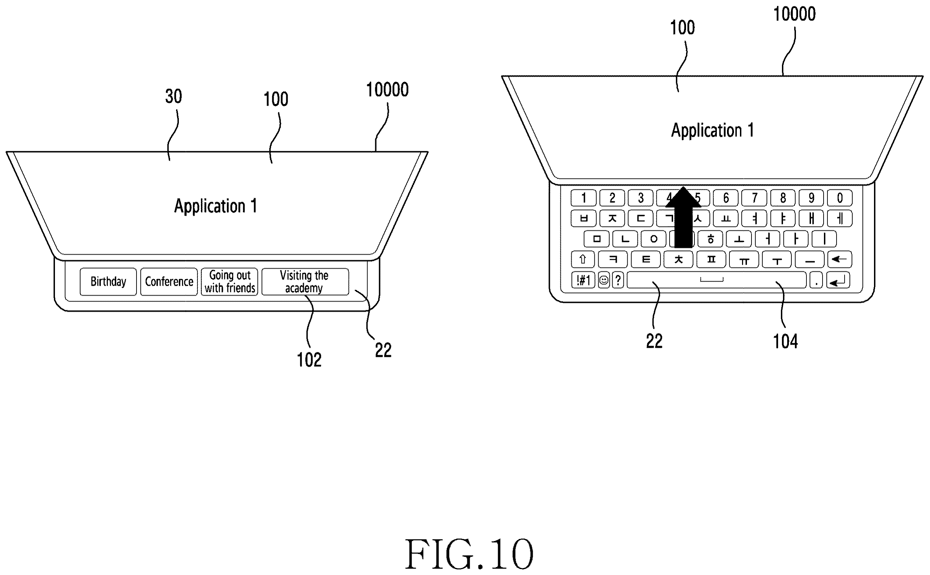

FIG. 10 is a view illustrating an example of change of a GUI on a portion area of the first display as the size of the exposed portion area of the first display is changed by multi-folding of the electronic device according to an embodiment of the disclosure.

Referring to FIG. 10, when the size of the exposed portion area 22 of the first display 20 is included within the first range, an execution screen 100 of an application may be displayed on the second display 30, and a GUI 102 including objects for selecting words to input to the application may be displayed on the exposed portion area 22 of the first display 20. In this case, the execution screen 100 of the application displayed on the second display 30 may be an execution screen of the application that may receive user's character input. For example, the execution screen 100 of the application displayed on the second display 30 may be an application for schedule management, but is not limited thereto.

Thereafter, when the size of the exposed portion area 22 increases as the folding angle of the electronic device 10000 is changed by the user, and the size of the exposed portion area 22 is included within the second range, a GUI 104 of a keyboard application for receiving a user input on the application may be displayed on the exposed portion area 22 of the first display 20.

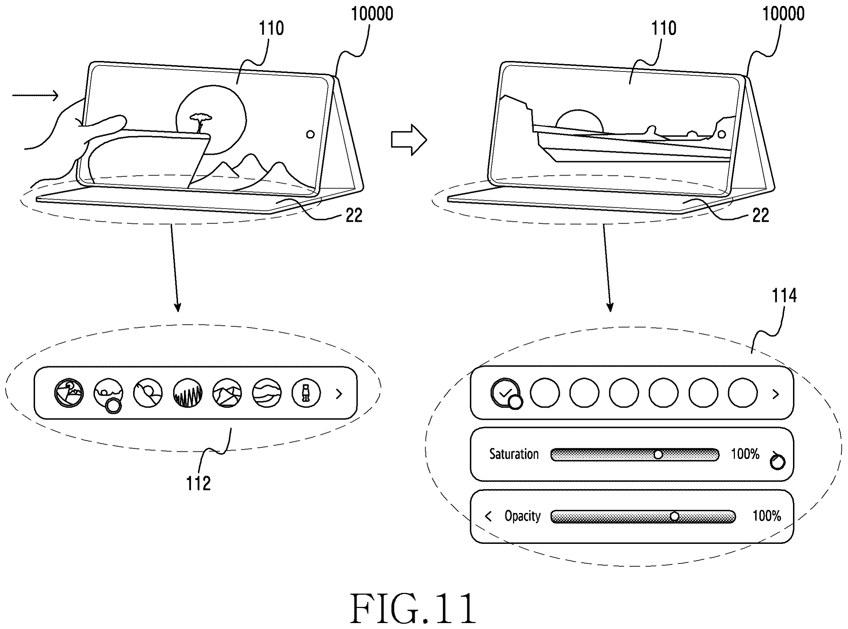

FIG. 11 is a view illustrating an example of change of a GUI related to a sleep-inducing image on the portion area of the first display as the size of the exposed portion area of the first display is changed by multi-folding of the electronic device according to an embodiment of the disclosure.

Referring to FIG. 11, when the size of the exposed portion area 22 of the first display 20 is included within the first range, an execution screen 110 of an application for displaying a sleeping-inducing image may be displayed on the second display 30, and a GUI 112 including objects for changing the theme of the sleep-inducing image may be displayed on the exposed portion area 22 of the first display 20.

Thereafter, when the size of the exposed portion area 22 increases as the folding angle of the electronic device 10000 is changed by the user, and the size of the exposed portion area 22 is included within the second range, a GUI 114 for tunning attributes of the sleep-inducing image may be displayed on the exposed portion area 22 of the first display 20.

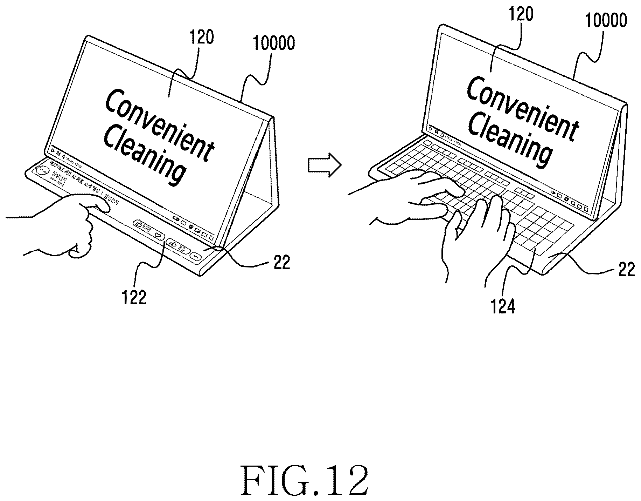

FIG. 12 is a view illustrating an example of change of a GUI for a user input related to a video on a portion area of the first display as the size of the exposed portion area of the first display is changed by multi-folding of the electronic device according to an embodiment of the disclosure.

Referring to FIG. 12, when the size of the exposed portion area 22 of the first display 20 is included within the first range, an execution screen 120 of an application for displaying a web video may be displayed on the second display 30, and a simple GUI 122 including image information of the web video and objects for evaluating the web video may be displayed on the exposed portion area 22 of the first display 20.

Thereafter, when the size of the exposed portion area 22 increases as the folding angle of the electronic device 10000 is changed by the user, and the size of the exposed portion area 22 is included within the second range, a GUI 124 for checking comments on the web video and writing comments may be displayed on the exposed portion area 22 of the first display 20. For example, the GUI 124 may include a keyboard for receiving a user input, but is not limited thereto.

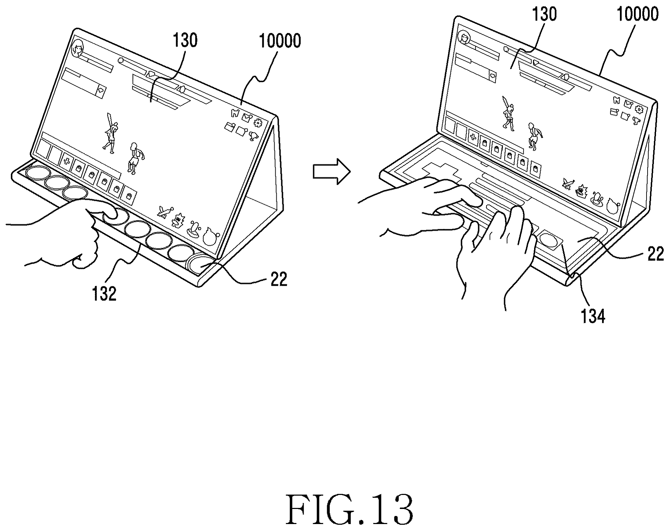

FIG. 13 is a view illustrating an example of chang of a GUI for a user input related to a game content on a portion area of the first display as the size of the exposed portion area of the first display is changed by multi-folding of the electronic device according to an embodiment of the disclosure.

Referring to FIG. 13, when the size of the exposed portion area 22 of the first display 20 is included within the first range, an execution screen 130 of a game application may be displayed on the second display 30, and a GUI 132 for simply operating the game content may be displayed on the exposed portion area 22 of the first display 20. For example, the game content may be a game content that is automatically controlled without requiring a user input for a long time, but is not limited thereto.

Thereafter, when the size of the exposed portion area 22 increases as the folding angle of the electronic device 10000 is changed by the user, and the size of the exposed portion area 22 is included within the second range, a GUI 134 including a controller for the user to actively operate the game content may be displayed on the exposed portion area 22 of the first display 20.

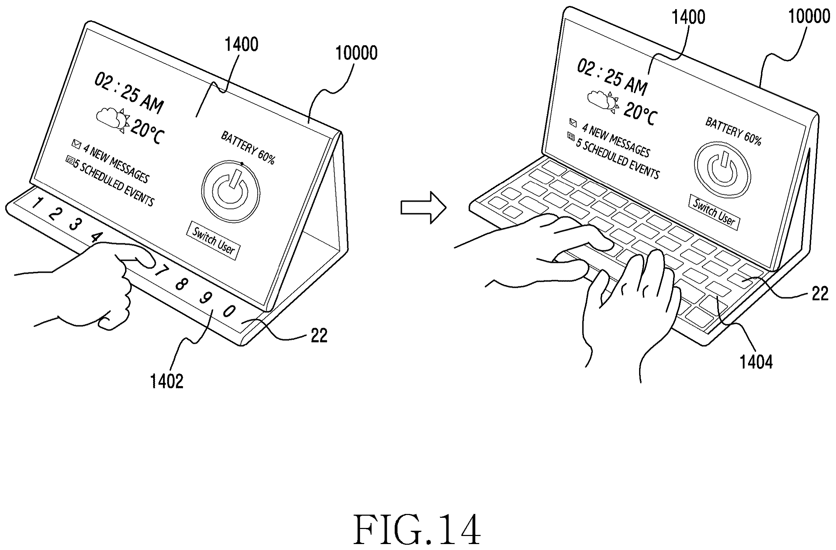

FIG. 14 is a view illustrating an example of change of a GUI for unlocking a locking screen on a portion area of the first display as the size of the exposed portion area of the first display is changed by multi-folding of the electronic device according to an embodiment of the disclosure.

Referring to FIG. 14, when the size of the exposed portion area 22 of the first display 20 is included within the first range, a locking screen 1400 may be displayed on the second display 30, and a GUI 1402 including a number keypad for inputting numbers to unlock the locking screen 140 may be displayed on the exposed portion area 22 of the first display 20. For example, the locking screen 1400 on the second display 30 may provide a function of a dashboard to provide designated information (for example, current time, weather, message notification, schedule notification and/or a remaining capacity of a battery), but this should not be considered as limiting.

Thereafter, when the size of the exposed portion area 22 increases as the folding angle of the electronic device 10000 is changed by the user, and the size of the exposed portion area 22 is included within the second range, a GUI 1404 including a keyboard for inputting characters to unlock the locking screen 1400 may be displayed on the exposed portion area 22 of the first display 20.

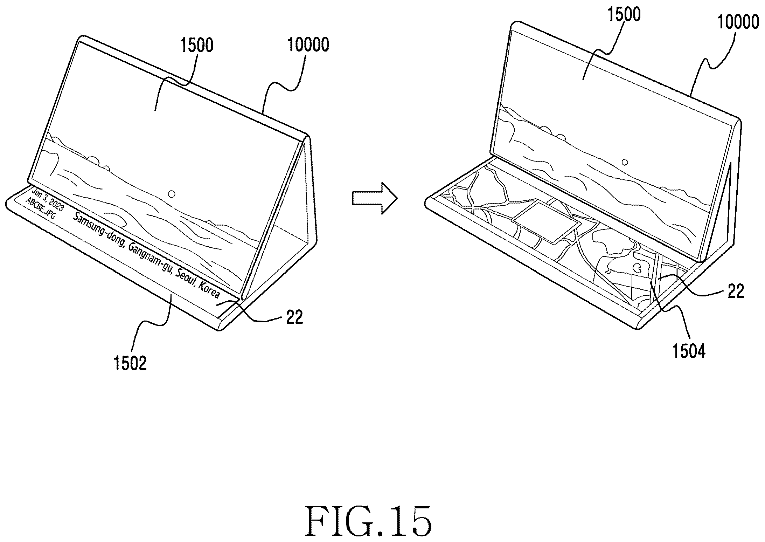

FIG. 15 is a view illustrating an example of change of a GUI for displaying information related to a photo on a portion area of the first display as the size of the exposed portion area of the first display is changed by multi-folding of the electronic device according to an embodiment of the disclosure.

Referring to FIG. 15, when the size of the exposed portion area 22 of the first display 20 is included within the first range, a photo image 1500 provided by a gallery application may be displayed on the second display 30, and a GUI 1502 including simple image information (for example, a shooting date, a shooting position, and/or a file name) on the photo image may be displayed on the exposed portion area 22 of the first display 20.

Thereafter, when the size of the exposed portion area 22 increases as the folding angle of the electronic device 10000 is changed, and the size of the exposed portion area 22 is included within the second range, a GUI 1504 including a map indicating a position where the photo image is shot may be displayed on the exposed portion area 22 of the first display 20. For example, the information on the position where the photo image 1500 is shot may be provided to a map application from the gallery application, and the GUI 1504 may be displayed by the map application.

FIGS. 10 to 15 illustrate examples of change of the GUI on the portion area of the first display as the size of the exposed portion area of the first display is changed by multi-folding of the electronic device, but this should not be considered as limiting.

For example, the application displayed on the second display 30 may be a banking application. In this case, when the size of the exposed portion area 22 of the first display 20 is included within the first range, a GUI for selecting an account number stored in a clip board may be displayed on the exposed portion area 22 of the first display 20. Thereafter, when the size of the exposed portion area increases as the folding angle of the electronic device 10000 is changed by the user, and the size of the exposed portion area 22 is included within the second range, an execution screen of another application related to the banking application may be displayed on the exposed portion area 22 of the first display 20. For example, a memo application and a calculator application related to the banking application may be displayed on the exposed portion area 22, and the user may calculate a remittance through the execution screen of the calculator application.

For example, the application displayed on the second display 30 may be an application for tracing stocks. In this case, when the size of the exposed portion area 22 of the first display 20 is included within the first range, a GUI including personal information related to the stock trade may be displayed on the exposed portion area 22 of the first display 20. The GUI including simple personal information related to the stock trade may include, for example, user's stock returns and account information. Thereafter, when the size of the exposed portion area 22 increases as the folding angle of the electronic device 10000 is changed by the user, and the size of the exposed portion area 22 is included within the second range, a GUI including detailed objects for controlling the stock trade may be displayed on the exposed portion area 22 of the first display 20. For example, the GUI including detailed objects for controlling the stock trade may include objects for identifying necessary information for buying and selling stocks, and for buying and selling stocks.

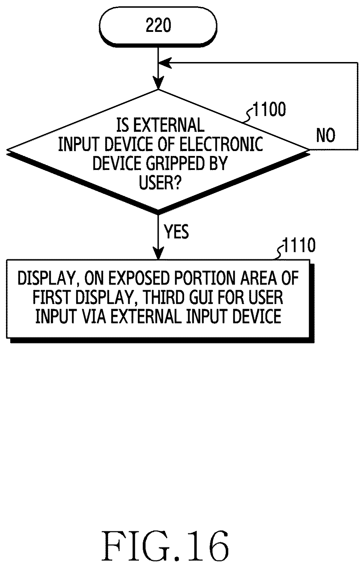

FIG. 16 is a flowchart of a method for changing and displaying a GUI on an exposed portion area of the first display when an external input device of the electronic device is gripped by the user according to an embodiment of the disclosure.

Operations 1100 and 1110 of FIG. 16 may be performed after operation 220 of FIG. 2, but this should not be considered as limiting.

In operation 1100, the electronic device 10000 may determine whether the external input device of the electronic device 10000 is gripped by the user. The electronic device 10000 may determine that the external input device is gripped by the user as the external input device and the electronic device 10000 are connected by short-range wireless communication. For example, the external input device of the electronic device 10000 may be a stylus pen. In this case, as the stylus pen is connected with the electronic device 10000 by short-range wireless communication, the electronic device 10000 may determine that the external electronic device is gripped by the user.

According to an embodiment, as an external input device attachable to and detachable from the electronic device 10000 is detached from the electronic device 10000 and the external input device and the electronic device 10000 are connected by short-range wireless communication, the electronic device 10000 may determine that the external input device is gripped by the user. For example, the external input device of the electronic device 10000 may be a stylus pen that is inserted into the electronic device 10000. In this case, when the stylus pen inserted into the electronic device 10000 is detached from the electronic device 10000 and short-range communication is connected between the stylus pen and the electronic device 10000, the electronic device 10000 may determine that the external input device is gripped by the user.

In the above example, it is illustrated that the electronic device 10000 determines that the external input device is gripped by the user, but this should not be considered as limiting. The electronic device 10000 may determine that an external input device wirelessly connected with the electronic device 10000 is used by the user.

In operation 1110, the electronic device 10000 may display a third GUI for a user input through the external input device on the exposed portion area of the first display 20. The third GUI may be a GUI for receiving a user input by the external input device. For example, the third GUI may be a GUI of an application for receiving a handwriting input by the stylus pen, but is not limited thereto. According to an embodiment, when it is determined that the external input device is gripped by the user, the third GUI may be displayed on the exposed portion area of the first display 20 in preference to other GUIs. For example, when it is determined that the external input device is gripped by the user, the third GUI may be displayed on the exposed portion area of the first display 20 preferentially without displaying the first GUI and the second GUI.

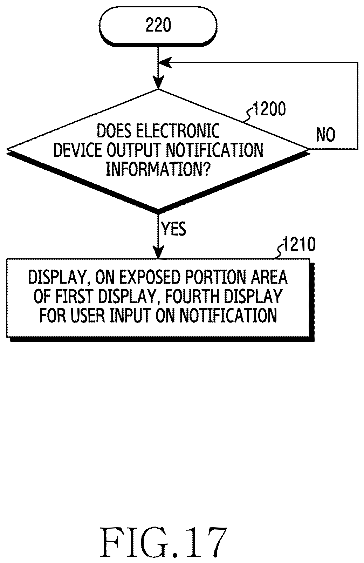

FIG. 17 is a flowchart of a method for changing and displaying a GUI on an exposed portion area of the first display when the electronic device outputs notification information according to an embodiment of the disclosure.

Operations 1200 and 1210 of FIG. 17 may be performed after operation 220 of FIG. 2, but this should not be considered as limiting.

In operation 1200, the electronic device 10000 may determine whether notification information is outputted. The electronic device 10000 may output notification information generated inside the electronic device 1000 and/or notification information received from the outside of the electronic device 10000. According to an embodiment, the electronic device 10000 may display the notification information on the second display 30. For example, the electronic device 10000 may display notification information generated by at least one application in the electronic device 10000 on the second display 30. For example, the electronic device 10000 may display notification information for notifying a message received from an external electronic device 10000 on the second display 30.

In operation 1210, the electronic device 10000 may display a fourth GUI for a user input on the notification on the exposed portion area of the first display 20. The fourth GUI may be a GUI for receiving a user input related to the notification information. For example, when the notification information is notification information indicating a message received from an external electronic device, the fourth GUI may include at least a portion of the execution screen of a message application. In addition, when the notification information is notification information for notifying a schedule registered at a calendar application, the fourth GUI may include at least a portion of the execution screen of the calendar application. However, types of notification information and types of the fourth GUI are not limited thereto.

According to an embodiment, when the notification information is outputted, the fourth GUI may be displayed on the exposed portion area of the first display 20 in preference to other GUIs. For example, when the notification information is outputted, the electronic device 10000 may display the fourth GUI preferentially without displaying the first GUI and the second GUI on the exposed portion area of the first display 20.

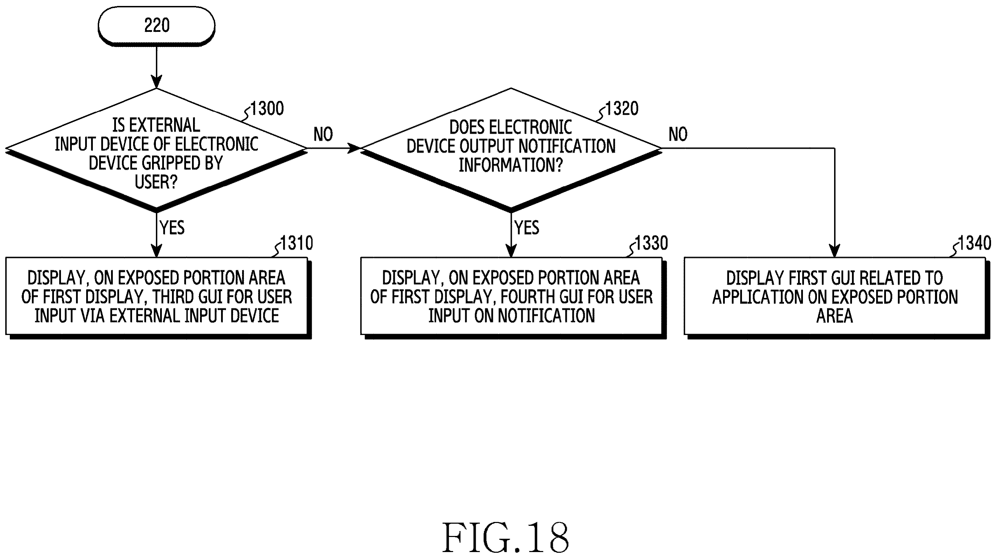

FIG. 18 is a flowchart of a method for changing and displaying a GUI on an exposed portion area of the first display considering whether an external input device of the electronic device is gripped by a user or the electronic device outputs notification information according to an embodiment of the disclosure.

Operations 1300 to 1330 of FIG. 18 may be performed after operation 220 of FIG. 2, but this should not be considered as limiting.

In operation 1300, the electronic device 10000 may determine whether an external input device is gripped by a user. Operation 1300 may correspond to operation 1100.

As it is determined that the external input device of the electronic device 10000 is gripped by the user, the electronic device 10000 may display the third GUI for a user input through the external input device on the exposed portion area of the first display 20 in operation 1310. Operation 1310 may correspond to operation 1110.

As it is determined that the external input device of the electronic device 10000 is not gripped by the user, the electronic device 10000 may determine whether notification information is outputted in operation 1320. Operation 1320 may correspond to operation 1200.

As it is determined that the electronic device 10000 outputs the notification information, the electronic device 10000 may display the fourth GUI for a user input on the notification on the exposed portion area of the first display 20 in operation 1330. Operation 1330 may correspond to operation 1210.

As it is determined that the electronic device 10000 does not output the notification information, the electronic device 10000 may display the first GUI or the second GUI related to an application on the exposed portion area of the first display 20 in operation 1340. For example, when the size of the exposed portion area of the first display 20 is included within the first range, the electronic device 10000 may display the first GUI on the exposed portion area of the first display 20. Alternatively, when the size of the exposed portion area of the first display 20 is included within the second range, the electronic device 10000 may display the second GUI on the exposed portion area of the first display 20.

In FIG. 18, it is illustrated that the electronic device 10000 displays the third GUI in preference to the fourth GUI, but this should not be considered as limiting. The electronic device 10000 may display the fourth GUI in preference to the third GUI.

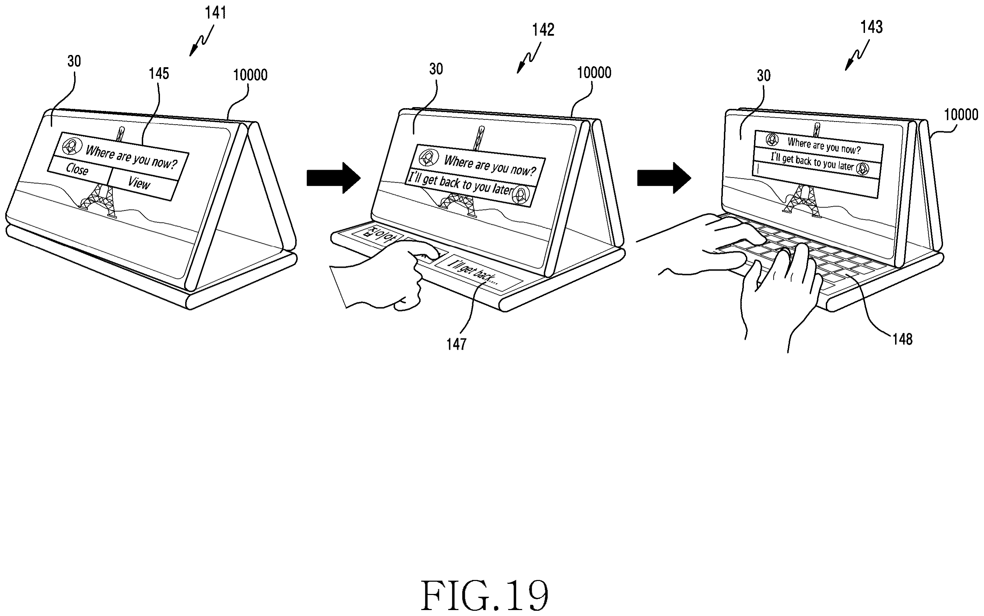

FIG. 19 is a view illustrating an example of displaying a GUI related to notification information on an exposed portion area of the first display when the electronic device receives the notification information according to an embodiment of the disclosure.

Referring to identification number 141 of FIG. 19, as the electronic device 10000 receives a message from an external electronic device 10000, the electronic device 10000 may display notification information 145 notifying the received message on the second display 30 of the electronic device 10000.

Thereafter, referring to identification number 142 of FIG. 19, as the folding angle of the electronic device 10000 is changed by the user and the size of the exposed area 22 of the first display 20 is included within the first range (for example, when one side 31 of the first housing 12 is located at a position that is longer than the first distance range and shorter than the second distance range from one side 21 of the third housing 16), the electronic device 10000 may display a GUI 147 for selecting a text for sending a message on the exposed area 22 of the first display 20. In this case, for example, the electronic device 10000 may display, on the second display 30 of the electronic device 10000, a GUI for displaying the received message and displaying a text selected by the user as a message to send.

Thereafter, referring to identification number 143 of FIG. 19, as the folding angle of the electronic device 10000 is changed by the user and the size of the exposed area 22 of the first display 20 is included within the second range (for example, when one side 31 of the first housing 12 is located at a position that is longer than the second distance range and shorter than the third distance range from one side 21 of the third housing 16), the electronic device 10000 may display a GUI 148 of a keyboard for inputting a text for sending a message on the exposed area 22 of the first display 20. In this case, for example, the electronic device 10000 may display, on the second display 30 of the electronic device 10000, a GUI for displaying the received message and displaying a message inputted through the keyboard.

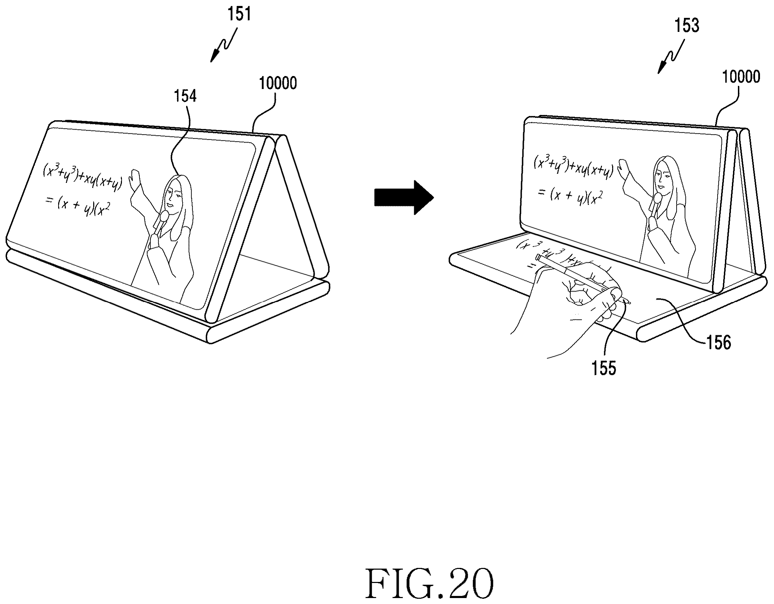

FIG. 20 is a view illustrating an example of displaying a GUI related to a gripped external input device on an exposed portion area of the first display when the external input device of the electronic device is gripped by the user according to an embodiment of the disclosure.

Referring to identification number 151 of FIG. 20, the electronic device 10000 may display an execution screen 154 of an application for replaying a video. A lecture content may be displayed within the execution screen 154 of the application for replaying the video.

Thereafter, referring to identification number 153 of FIG. 20, as the folding angle of the electronic device 10000 is changed by the user and the first display 20 of the electronic device 10000 is exposed, the electronic device 10000 may identify that a stylus pen 155 is gripped by the user. Thereafter, the electronic device 10000 may display an execution screen 156 of an application for receiving user's handwriting input through the stylus pen 155 on the exposed area 22 of the first display 20.

According to an embodiment, a method for displaying an execution screen of an application by an electronic device may include: displaying (210) an execution screen of an application on a second display 30 of the electronic device 10000; identifying (200) whether one side of a first housing is located on a portion corresponding to a third housing in an entire area of a first display 20 according to the electronic device including the first housing 12, the second housing 14, and the third housing 16 being multi-folded; and changing (220, 230) a display mode of the first display from a first display mode to a second display mode, based on identifying that the one side of the first housing is located on the portion corresponding to the third housing, wherein the first display is disposed across the first housing, the second housing, and the third housing, and faces a first direction of the electronic device, and the second display is disposed at the first housing and faces a second direction of the electronic device, wherein the second display mode is a mode for controlling an activated portion area of the first display and an inactivated remaining area of the first display based on a position on the portion of the first display where the one side of the first housing is located.

According to an embodiment, the electronic device may be multi-folded by the first hinge between the first housing and the second housing, and the second hinge between the second housing and the third housing, and the activated portion area may be an area exposed to an outside of the electronic device from the portion where the one side of the first housing is located among the entire area of the first display.

According to an embodiment, the method may further include inactivating the entire area of the first display when the one side of the first housing is located at a first position on the portion of the first display.

According to an embodiment, when the one side of the first housing is located at the first position, the size of an area of the first display that is exposed to the outside of the electronic device may be smaller than a designated threshold value.

According to an embodiment, the method may further include, when the first side surface is located at a second position on the portion of the first display, activating the portion area of the first display and inactivating the remaining portion of the first display, and displaying a first UI related to the application on the activated portion area.

According to an embodiment, the method may further include enlarging the activated portion area as the first side surface is located at a third position on the portion of the first display, and displaying a second UI related to the application on the enlarged activated portion area.

According to an embodiment, the first UI may be displayed on the portion area when the size of the activated portion area is within a first range, and the first UI changes to the second UI as the size of the portion area increases to a second range greater than the first range.

According to an embodiment, the method may further include: identifying that an external input device for the electronic device is gripped by a user; and displaying, on the portion area, a third UI for receiving a user input by the external input device, in response to identifying that the external input device is gripped.

According to an embodiment, the method may further include, when the electronic device outputs notification information, display, on the portion area, a fourth UI for a user input to the notification information.

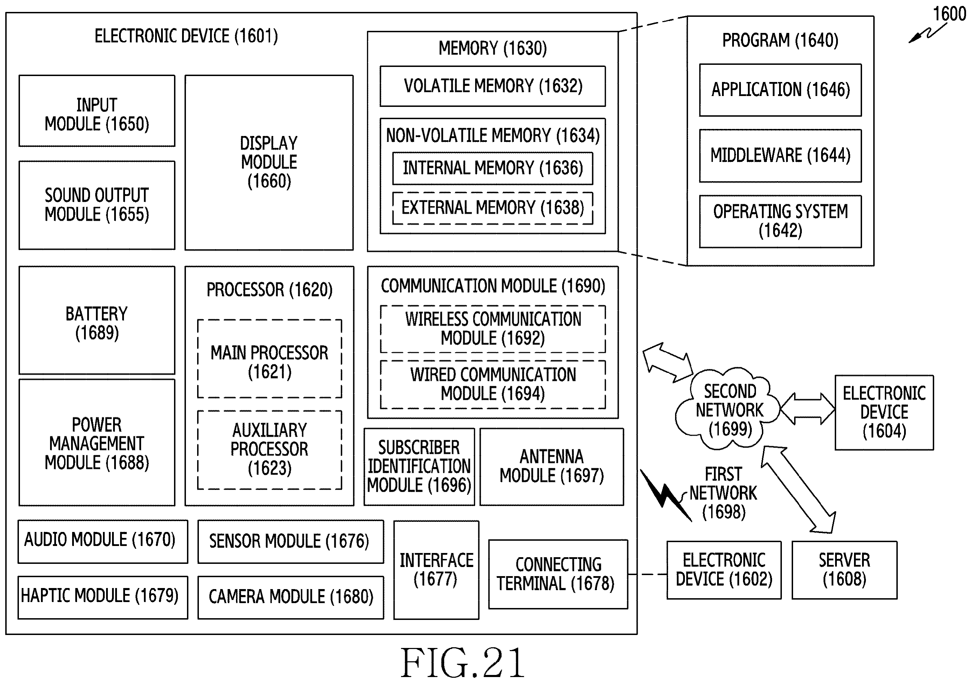

Fig. 21 is a block diagram illustrating an electronic device 1601 in a network environment 1600 according to various embodiments. Referring to Fig. 21, the electronic device 1601 in the network environment 1600 may communicate with an electronic device 1602 via a first network 1698 (e.g., a short-range wireless communication network), or at least one of an electronic device 1604 or a server 1608 via a second network 1699 (e.g., a long-range wireless communication network). According to an embodiment, the electronic device 1601 may communicate with the electronic device 1604 via the server 1608. According to an embodiment, the electronic device 1601 may include a processor 1620, memory 1630, an input module 1650, a sound output module 1655, a display module 1660, an audio module 1670, a sensor module 1676, an interface 1677, a connecting terminal 1678, a haptic module 1679, a camera module 1680, a power management module 1688, a battery 1689, a communication module 1690, a subscriber identification module(SIM) 1696, or an antenna module 1697. In some embodiments, at least one of the components (e.g., the connecting terminal 1678) may be omitted from the electronic device 1601, or one or more other components may be added in the electronic device 1601. In some embodiments, some of the components (e.g., the sensor module 1676, the camera module 1680, or the antenna module 1697) may be implemented as a single component (e.g., the display module 1660).

The processor 1620 may execute, for example, software (e.g., a program 1640) to control at least one other component (e.g., a hardware or software component) of the electronic device 1601 coupled with the processor 1620, and may perform various data processing or computation. According to one embodiment, as at least part of the data processing or computation, the processor 1620 may store a command or data received from another component (e.g., the sensor module 1676 or the communication module 1690) in volatile memory 1632, process the command or the data stored in the volatile memory 1632, and store resulting data in non-volatile memory 1634. According to an embodiment, the processor 1620 may include a main processor 1621 (e.g., a central processing unit (CPU) or an application processor (AP)), or an auxiliary processor 1623 (e.g., a graphics processing unit (GPU), a neural processing unit (NPU), an image signal processor (ISP), a sensor hub processor, or a communication processor (CP)) that is operable independently from, or in conjunction with, the main processor 1621. For example, when the electronic device 1601 includes the main processor 1621 and the auxiliary processor 1623, the auxiliary processor 1623 may be adapted to consume less power than the main processor 1621, or to be specific to a specified function. The auxiliary processor 1623 may be implemented as separate from, or as part of the main processor 1621.

The auxiliary processor 1623 may control at least some of functions or states related to at least one component (e.g., the display module 1660, the sensor module 1676, or the communication module 1690) among the components of the electronic device 1601, instead of the main processor 1621 while the main processor 1621 is in an inactive (e.g., sleep) state, or together with the main processor 1621 while the main processor 1621 is in an active state (e.g., executing an application). According to an embodiment, the auxiliary processor 1623 (e.g., an image signal processor or a communication processor) may be implemented as part of another component (e.g., the camera module 1680 or the communication module 1690) functionally related to the auxiliary processor 1623. According to an embodiment, the auxiliary processor 1623 (e.g., the neural processing unit) may include a hardware structure specified for artificial intelligence model processing. An artificial intelligence model may be generated by machine learning. Such learning may be performed, e.g., by the electronic device 1601 where the artificial intelligence is performed or via a separate server (e.g., the server 1608). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 1630 may store various data used by at least one component (e.g., the processor 1620 or the sensor module 1676) of the electronic device 1601. The various data may include, for example, software (e.g., the program 1640) and input data or output data for a command related thererto. The memory 1630 may include the volatile memory 1632 or the non-volatile memory 1634.

The program 1640 may be stored in the memory 1630 as software, and may include, for example, an operating system (OS) 1642, middleware 1644, or an application 1646.

The input module 1650 may receive a command or data to be used by another component (e.g., the processor 1620) of the electronic device 1601, from the outside (e.g., a user) of the electronic device 1601. The input module 1650 may include, for example, a microphone, a mouse, a keyboard, a key (e.g., a button), or a digital pen (e.g., a stylus pen).

The sound output module 1655 may output sound signals to the outside of the electronic device 1601. The sound output module 1655 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 1660 may visually provide information to the outside (e.g., a user) of the electronic device 1601. The display module 1660 may include, for example, a display, a hologram device, or a projector and control circuitry to control a corresponding one of the display, hologram device, and projector. According to an embodiment, the display module 1660 may include a touch sensor adapted to detect a touch, or a pressure sensor adapted to measure the intensity of force incurred by the touch.

The audio module 1670 may convert a sound into an electrical signal and vice versa. According to an embodiment, the audio module 1670 may obtain the sound via the input module 1650, or output the sound via the sound output module 1655 or a headphone of an external electronic device (e.g., an electronic device 1602) directly (e.g., wiredly) or wirelessly coupled with the electronic device 1601.

The sensor module 1676 may detect an operational state (e.g., power or temperature) of the electronic device 1601 or an environmental state (e.g., a state of a user) external to the electronic device 1601, and then generate an electrical signal or data value corresponding to the detected state. According to an embodiment, the sensor module 1676 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 1677 may support one or more specified protocols to be used for the electronic device 1601 to be coupled with the external electronic device (e.g., the electronic device 1602) directly (e.g., wiredly) or wirelessly. According to an embodiment, the interface 1677 may include, for example, a high definition multimedia interface (HDMI), a universal serial bus (USB) interface, a secure digital (SD) card interface, or an audio interface.

A connecting terminal 1678 may include a connector via which the electronic device 1601 may be physically connected with the external electronic device (e.g., the electronic device 1602). According to an embodiment, the connecting terminal 1678 may include, for example, a HDMI connector, a USB connector, a SD card connector, or an audio connector (e.g., a headphone connector).

The haptic module 1679 may convert an electrical signal into a mechanical stimulus (e.g., a vibration or a movement) or electrical stimulus which may be recognized by a user via his tactile sensation or kinesthetic sensation. According to an embodiment, the haptic module 1679 may include, for example, a motor, a piezoelectric element, or an electric stimulator.

The camera module 1680 may capture a still image or moving images. According to an embodiment, the camera module 1680 may include one or more lenses, image sensors, image signal processors, or flashes.

The power management module 1688 may manage power supplied to the electronic device 1601. According to one embodiment, the power management module 1688 may be implemented as at least part of, for example, a power management integrated circuit (PMIC).

The battery 1689 may supply power to at least one component of the electronic device 1601. According to an embodiment, the battery 1689 may include, for example, a primary cell which is not rechargeable, a secondary cell which is rechargeable, or a fuel cell.

The communication module 1690 may support establishing a direct (e.g., wired) communication channel or a wireless communication channel between the electronic device 1601 and the external electronic device (e.g., the electronic device 1602, the electronic device 1604, or the server 1608) and performing communication via the established communication channel. The communication module 1690 may include one or more communication processors that are operable independently from the processor 1620 (e.g., the application processor (AP)) and supports a direct (e.g., wired) communication or a wireless communication. According to an embodiment, the communication module 1690 may include a wireless communication module 1692 (e.g., a cellular communication module, a short-range wireless communication module, or a global navigation satellite system (GNSS) communication module) or a wired communication module 1694 (e.g., a local area network (LAN) communication module or a power line communication (PLC) module). A corresponding one of these communication modules may communicate with the external electronic device via the first network 1698 (e.g., a short-range communication network, such as Bluetooth^{™}, wireless-fidelity (Wi-Fi) direct, or infrared data association (IrDA)) or the second network 1699 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 1692 may identify and authenticate the electronic device 1601 in a communication network, such as the first network 1698 or the second network 1699, using subscriber information (e.g., international mobile subscriber identity (IMSI)) stored in the subscriber identification module 1696.

The wireless communication module 1692 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 1692 may support a high-frequency band (e.g., the mmWave band) to achieve, e.g., a high data transmission rate. The wireless communication module 1692 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 1692 may support various requirements specified in the electronic device 1601, an external electronic device (e.g., the electronic device 1604), or a network system (e.g., the second network 1699). According to an embodiment, the wireless communication module 1692 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 1697 may transmit or receive a signal or power to or from the outside (e.g., the external electronic device) of the electronic device 1601. According to an embodiment, the antenna module 1697 may include an antenna including a radiating element composed of a conductive material or a conductive pattern formed in or on a substrate (e.g., a printed circuit board (PCB)). According to an embodiment, the antenna module 1697 may include a plurality of antennas (e.g., array antennas). In such a case, at least one antenna appropriate for a communication scheme used in the communication network, such as the first network 1698 or the second network 1699, may be selected, for example, by the communication module 1690 (e.g., the wireless communication module 1692) from the plurality of antennas. The signal or the power may then be transmitted or received between the communication module 1690 and the external electronic device via the selected at least one antenna. According to an embodiment, another component (e.g., a radio frequency integrated circuit (RFIC)) other than the radiating element may be additionally formed as part of the antenna module 1697.

According to various embodiments, the antenna module 1697 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 1601 and the external electronic device 1604 via the server 1608 coupled with the second network 1699. Each of the electronic devices 1602 or 1604 may be a device of a same type as, or a different type, from the electronic device 1601. According to an embodiment, all or some of operations to be executed at the electronic device 1601 may be executed at one or more of the external electronic devices 1602, 1604, or 1608. For example, if the electronic device 1601 should perform a function or a service automatically, or in response to a request from a user or another device, the electronic device 1601, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 1601. The electronic device 1601 may provide the outcome, with or without further processing of the outcome, as at least part of a reply to the request. To that end, a cloud computing, distributed computing, mobile edge computing (MEC), or client-server computing technology may be used, for example. The electronic device 1601 may provide ultra low-latency services using, e.g., distributed computing or mobile edge computing. In another embodiment, the external electronic device 1604 may include an internet-of-things (IoT) device. The server 1608 may be an intelligent server using machine learning and/or a neural network. According to an embodiment, the external electronic device 1604 or the server 1608 may be included in the second network 1699. The electronic device 1601 may be applied to intelligent services (e.g., smart home, smart city, smart car, or healthcare) based on 5G communication technology or IoT-related technology.

According to an embodiment, the electronic device 1601 of FIG. 21 may be the electronic device 10000, and the electronic device 1610 may perform the functions of the electronic device 10000 of FIGS. 1 to 20. In this case, the display module 1660 of the electronic device 1601 may include the first display 20 and the second display 30. The electronic device 1602 may include the plurality of hinges 42, 44, 46.

According to an embodiment, the processor 1620 of the electronic device 1601 may identify whether the electronic device 1601 is placed on a floor by multi-folding. Multi-folding may include a plurality of portions of the electronic device 1601 being folded by the plurality of hinges. For example, when the electronic device 1601 includes the first hinge 42 and the second hinge 44, the first display 20 of the electronic device 1601 may be folded by the first hinge 42 in a direction in which the first housing 12 and the second housing 14 face each other, and the first display 20 of the electronic device 1601 may be folded by the second hinge 44 in a direction in which the second housing 14 and the third housing 16 face each other.

According to an embodiment, the processor 1620 may identify whether the first display 20 of the electronic device 1601 is surrounded by the housings of the electronic device 1601 by multi-folding. For example, the electronic device 1601 may be multi-folded such that one side of the first housing 12 contacts one side of the third housing 16, and accordingly, the entire area of the first display 20 of the electronic device 1601 may be surrounded by the first housing 12, the second housing 14, and the third housing 16 of the electronic device 1601. The entire area of the first display 20 of the electronic device 1601 may be surrounded by the first housing 12, the second housing 14, and the third housing 16 of the electronic device 1601, such that the entire area of the first display 20 is not exposed to the outside of the electronic device 1601.

According to an embodiment, the processor 1620 may identify whether the electronic device 1601 is placed on a floor with the first display 20 of the electronic device 1601 being surrounded by the housings of the electronic device 1601 by multi-folding. The processor 1620 may identify whether the electronic device 1601 is placed on the floor by using at least one sensor module 1676 (for example, a gyro sensor, an acceleration sensor) and/or at least one camera module 1680 within the electronic device 1601.

According to an embodiment, the processor 1620 may display an execution screen of an application on the second display 30. As the first display 20 of the electronic device 1601 is surrounded by the plurality of housings 12, 14, 16 of the electronic device by multi-folding, the processor 1620 may display an execution screen of the application on the second display 30. Alternatively, when the electronic device 1601 is placed on the floor with the first display 20 of the electronic device 1601 being surrounded by the plurality of housings of the electronic device by multi-folding, the electronic device 1601 may display the execution screen of the application on the second display 30 of the electronic device 1601.

According to an embodiment, the application may be an application that supports a function of displaying the execution screen of the application on the second display 30 of the electronic device 1601 when the electronic device 1601 is multi-folded. When the first display 20 is surrounded by the housings by multi-folding in the middle of displaying the execution screen of the application on the first display 20, the application may provide the execution screen to be displayed on the second display 30 of the electronic device 1601.

According to an embodiment, the processor 1620 may determine whether a portion area of the first display 20 is exposed. When the entire area of the first display 20 of the electronic device 1601 is surrounded by the housings of the electronic device 1601 by multi-folding, the folding angles of multi-folding of the electronic device 1601 may be changed, such that the portion area of the first display 20 of the electronic device 1601 is exposed to the outside of the electronic device 1601. For example, as the folding angles of multi-folding of the electronic device 1601 are changed with the first display 20 of the electronic device 1601 being surrounded by the first housing 12, the second housing 14, and the third housing 16, one end of the third housing 16 may slide on the first display 20 within the first housing 12. For example, as one end of the third housing 16 slides on the first display 20 within the first housing 12, the portion area of the first display 20 within the first housing 12 may be exposed to the outside of the electronic device 1601.

According to an embodiment, in the state in which the entire area of the first display 20 of the electronic device 1601 is surrounded by the housings of the electronic device 1601 by multi-folding and the electronic device 1601 is placed on the floor, the processor 1620 may determine whether the portion area of the first display 20 is exposed.

According to an embodiment, as the folding angles of multi-folding are changed, the size of the exposed portion area of the first display 20 may increase or decrease.

According to an embodiment, the processor 1620 may determine whether the portion area of the first display 20 is exposed by using at least one sensor within the electronic device 1601. For example, the processor 1620 may determine whether the portion area of the first display 20 is exposed by using at least one of a gyro sensor, an acceleration sensor, or an angle sensor, but is not limited thereto.

According to an embodiment, the processor 1620 may determine whether the portion area of the first display 20 is exposed as shown in FIGS. 5 and 6.

According to an embodiment, the processor 1620 may display a GUI related to an application on the exposed portion area. According to an embodiment, when the portion area of the first display 20 is exposed with the entire area of the first display 20 of the electronic device 1601 being surrounded by the housings of the electronic device 1601 by multi-folding, the processor 1620 may display a GUI related to the application of the execution screen displayed on the second display 30 on the exposed portion area of the first display 20. According to an embodiment, when the portion area of the first display 20 is exposed in the state in which the entire area of the first display 20 of the electronic device 1601 is surrounded by the housings of the electronic device 1601 by multi-folding and the electronic device 1601 is placed on the floor, the processor 1620 may display a GUI related to the application of the execution screen displayed on the second display 30 on the exposed portion area of the first display 20.

According to an embodiment, the GUI related to the application may include a GUI provided by the application and/or a GUI provided by another application related to the application.

For example, the GUI displayed on the exposed portion area of the first display 20 may include a portion of the execution screen of the application displayed on the second display 30. For example, the GUI displayed on the exposed portion area of the first display 20 may include a GUI that is provided by the application to control the application or perform a user input on the application. For example, the GUI displayed on the exposed portion area of the first display 20 may include a GUI that is provided by another application to control the application or perform a user input on the application. For example, the GUI displayed on the exposed portion area of the first display 20 may include at least a portion of the execution screen of another application that is mainly used by the user in relation with the application.

According to an embodiment, as the folding angles of multi-folding are changed, the size of the exposed portion area of the first display 20 may increase or decrease, and, as the size of the exposed portion area of the first display 20 increases or decreases, the GUI displayed on the exposed portion area may be changed.

However, examples of the GUI displayed on the exposed portion area of the first display 20 are not limited thereto, and for example, the processor 1620 may display a GUI on the exposed portion area of the first display 20 as shown in FIGS. 7 to 20.

According to an embodiment, an electronic device (for example, 10000, 1601) may include: a first housing 12; a second housing 14 connected to the first housing via a first hinge 42; a third housing 16 connected to the second housing via a second hinge 44; a first display 20 disposed across the first housing, the second housing, and the third housing and exposed, facing a first direction of the electronic device; a second display 30 disposed at the first housing and facing a second direction of the electronic device; a memory 1630 storing instructions; and at least one processor 1620 operatively connected to the first display, the second display and the memory, wherein, when executed by the at least one processor, the instructions cause the electronic device to: display an execution screen of an application on the second display; identify whether one side of the first housing is located on a portion corresponding to the third housing in an entire area of the first display as the electronic device is multi-folded; and change a display mode of the first display from a first display mode to a second display mode, based on identifying that the one side of the first housing is located on the portion corresponding to the third housing, wherein the second display mode is a mode for controlling an activated portion area of the first display and an inactivated remaining area of the first display based on a position on the portion of the first display where the one side of the first housing is located. According to an embodiment, an electronic device (for example, 10000, 1601) may include: a first housing 12; a second housing 14 connected to the first housing via a first hinge 42; a third housing 16 connected to the second housing via a second hinge 44; a first display 20 disposed across the first housing, the second housing, and the third housing and exposed, facing a first direction of the electronic device; a second display 30 disposed at the first housing and facing a second direction of the electronic device; a memory 1630 storing instructions; and at least one processor 1620 operatively connected to the first display, the second display and the memory, wherein, when executed by the at least one processor, the instructions cause the electronic device to: display an execution screen of an application on the second display; identify whether one side of the first housing is located on a portion corresponding to the third housing in an entire area of the first display as the electronic device is multi-folded; and change a display mode of the first display from a first display mode to a second display mode, based on identifying that the one side of the first housing is located on the portion corresponding to the third housing, wherein the second display mode is a mode for controlling an activated portion area of the first display and an inactivated remaining area of the first display based on a position on the portion of the first display where the one side of the first housing is located.

According to an embodiment, the electronic device may be multi-folded by the first hinge between the first housing and the second housing, and the second hinge between the second housing and the third housing, and the activated portion area may be an area exposed to an outside of the electronic device from the portion where the one side of the first housing is located among the entire area of the first display.

According to an embodiment, when executed by the at least one processor, the instructions may cause the electronic device to inactivate the entire area of the first display when the one side of the first housing is located at a first position on the portion of the first display.

According to an embodiment, when the one side of the first housing is located at the first position, the size of an area of the first display that is exposed to the outside of the electronic device may be smaller than a designated threshold value.

According to an embodiment, when executed by the at least one processor, the instructions may cause the electronic device to: when the first side surface is located at a second position on the portion of the first display, activate the portion area of the first display and inactivate the remaining portion of the first display, and display a first UI related to the application on the activated portion area.

According to an embodiment, when executed by the at least one processor, the instructions may cause the electronic device to enlarge the activated portion area as the first side surface is located at a third position on the portion of the first display, and to display a second UI related to the application on the enlarged activated portion area.

According to an embodiment, the first UI may be displayed on the portion area when the size of the portion area is within a first range, and the first UI may change to the second UI as the size of the portion area increases to a second range greater than the first range.

According to an embodiment, when executed by the at least one processor, the instructions may cause the electronic device to: identify that an external input device for the electronic device is gripped by a user; and display, on the portion area, a third UI for receiving a user input by the external input device, in response to identifying that the external input device is gripped.

According to an embodiment, when executed by the at least one processor, the instructions may cause the electronic device to, when the electronic device outputs notification information, display, on the portion area, a fourth UI for a user input to the notification information.

According to an embodiment, when executed by the at least one processor, the instructions may cause the electronic device to: identify whether the electronic device is placed on a floor with the third housing facing the floor; and change the display mode of the first display from the first display mode to the second display mode when the electronic device is placed on the floor.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 1640) including one or more instructions that are stored in a storage medium (e.g., internal memory 1636 or external memory 1638) that is readable by a machine (e.g., the electronic device 1601). For example, a processor (e.g., the processor 1620) of the machine (e.g., the electronic device 1601) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a first housing (12);
a second housing (14) connected to the first housing via a first hinge (42);
a third housing (16) connected to the second housing via a second hinge (44);
a first display (20) disposed across the first housing, the second housing, and the third housing and exposed, facing a first direction of the electronic device;
a second display (30) disposed at the first housing and facing a second direction of the electronic device;
memory (1630) storing instructions; and
at least one processor (1620) operatively connected to the first display, the second display and the memory,
wherein, when executed by the at least one processor, the instructions cause the electronic device to:
display an execution screen of an application on the second display;
identify whether one side of the first housing is located on a portion corresponding to the third housing in an entire area of the first display, based on a first folding angle between the first housing and the second housing and a second folding angle between the second housing and the third housing, according to the electronic device being multi-folded; and
change a display mode of the first display from a first display mode to a second display mode, based on identifying that the one side of the first housing is located on the portion corresponding to the third housing,
wherein the second display mode is a mode for controlling an activated portion area of the first display and an inactivated remaining area of the first display based on a position on the portion of the first display where the one side of the first housing is located.

2. The electronic device of claim 1, wherein the electronic device is multi-folded by the first hinge between the first housing and the second housing, and the second hinge between the second housing and the third housing, and
wherein the activated portion area is an area exposed to an outside of the electronic device from the portion where the one side of the first housing is located among the entire area of the first display.

3. The electronic device of any one of claim 1 and claim 2, wherein, when executed by the at least one processor, the instructions cause the electronic device to inactivate the entire area of the first display when the one side of the first housing is located at a first position on the portion of the first display.

4. The electronic device of claim 3, wherein, when the one side of the first housing is located at the first position, the size of an area of the first display that is exposed to the outside of the electronic device is smaller than a designated threshold value.

5. The electronic device of any one of claim 1 to claim 4, wherein, when executed by the at least one processor, the instructions cause the electronic device to:
when the one side is located at a second position on the portion of the first display, activate the portion area of the first display and inactivate the remaining portion of the first display, and
display a first UI related to the application on the activated portion area.

6. The electronic device of claim 5, wherein, when executed by the at least one processor, the instructions cause the electronic device to enlarge the activated portion area as the one side is located at a third position on the portion of the first display, and to display a second UI related to the application on the enlarged activated portion area.

7. The electronic device of claim 6, wherein the first UI is displayed on the activated portion area when the size of the activated portion area is within a first range, and
wherein the first UI changes to the second UI as the size of the activated portion area increases to a second range greater than the first range.

8. The electronic device of any one of claim 1 to claim 7, wherein, when executed by the at least one processor, the instructions cause the electronic device to:
identify that an external input device for the electronic device is gripped by a user; and
display, on the activated portion area, a third UI for receiving a user input by the external input device, in response to identifying that the external input device is gripped.

9. The electronic device of any one of claim 1 to claim 8, wherein, when executed by the at least one processor, the instructions cause the electronic device to, when the electronic device outputs notification information, display, on the portion area, a fourth UI for a user input to the notification information.

10. The electronic device of any one of claim 1 to claim 9, wherein, when executed by the at least one processor, the instructions cause the electronic device to:
identify whether the electronic device is placed on a floor with the third housing facing the floor, and
change the display mode of the first display from the first display mode to the second display mode when the electronic device is placed on the floor.

11. A method for displaying an execution screen of an application by an electronic device, the method comprising:
displaying (210) an execution screen of an application on a second display (30) of the electronic device (10000);
identifying (200) whether one side of a first housing is located on a portion corresponding to a third housing in an entire area of a first display (20), based on a first folding angle between the first housing and a second housing and a second folding angle between the second housing and the third housing, according to the electronic device comprising the first housing (12), the second housing (14), and the third housing (16) being multi-folded; and
changing (220, 230) a display mode of the first display from a first display mode to a second display mode, based on identifying that the one side of the first housing is located on the portion corresponding to the third housing,
wherein the first display is disposed across the first housing, the second housing, and the third housing, and faces a first direction of the electronic device, and the second display is disposed at the first housing and faces a second direction of the electronic device,
wherein the second display mode is a mode for controlling an activated portion area of the first display and an inactivated remaining area of the first display based on a position on the portion of the first display where the one side of the first housing is located.

12. The method of claim 11, wherein the electronic device is multi-folded by the first hinge between the first housing and the second housing, and the second hinge between the second housing and the third housing, and
wherein the activated portion area is an area exposed to an outside of the electronic device from the portion where the one side of the first housing is located among the entire area of the first display.

13. The method of any one of claim 11 and claim 12, further comprising inactivating the entire area of the first display when the one side of the first housing is located at a first position on the portion of the first display.

14. The method of claim 13, wherein, when the one side of the first housing is located at the first position, the size of an area of the first display that is exposed to the outside of the electronic device is smaller than a designated threshold value.

15. A computer-readable recording medium having a program recorded thereon to execute a method for displaying an execution screen of an application by an electronic device, the method comprising:
displaying (210) an execution screen of an application on a second display (30) of the electronic device (10000);
identifying (200) whether one side of a first housing is located on a portion corresponding to a third housing in an entire area of a first display (20), based on a first folding angle between the first housing and a second housing and a second folding angle between the second housing and the third housing, according to the electronic device comprising the first housing (12), the second housing (14), and the third housing (16) being multi-folded; and
changing (220, 230) a display mode of the first display from a first display mode to a second display mode, based on identifying that the one side of the first housing is located on the portion corresponding to the third housing,
wherein the first display is disposed across the first housing, the second housing, and the third housing, and faces a first direction of the electronic device, and the second display is disposed at the first housing and faces a second direction of the electronic device,
wherein the second display mode is a mode for controlling an activated portion area of the first display and an inactivated remaining area of the first display based on a position on the portion of the first display where the one side of the first housing is located.
